(19) **Europäisches Patentamt European Patent Office Office européen des brevets**

(11) **EP 4 352 985 B1**

(12) **EUROPEAN PATENT SPECIFICATION**

(45) Date of publication and mention of the grant of the patent:
**01.07.2026 Bulletin 2026/27**

(21) Application number: **22838008.5**

(22) Date of filing: **07.07.2022**

(51) International Patent Classification (IPC):
**H04W 12/041** (2021.01)    **H04W 12/06** (2021.01)
**H04L 9/40** (2022.01)    **H04L 9/08** (2006.01)

(52) Cooperative Patent Classification (CPC):
**H04L 9/0861; H04L 9/0891; H04L 9/40;**
**H04W 12/041;** H04L 2209/80; H04W 12/06

(86) International application number:
**PCT/KR2022/009835**

(87) International publication number:
**WO 2023/282656 (12.01.2023 Gazette 2023/02)**

(54) **KEY GENERATION IN AUTHENTICATION AND KEY MANAGEMENT FOR APPLICATIONS (AKMA)**

SCHLÜSSELERZEUGUNG BEI DER AUTHENTIFIZIERUNG UND SCHLÜSSELVERWALTUNG FÜR ANWENDUNGEN (AKMA)

GÉNÉRATION DE CLÉ LORS DE L'AUTHENTIFICATION ET LA GESTION DE CLÉS DES APPLICATIONS (AKMA)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2021 IN 202141030717**
**13.06.2022 IN 202141030717**

(43) Date of publication of application:
**17.04.2024 Bulletin 2024/16**

(73) Proprietor: **Samsung Electronics Co., Ltd.**
**Suwon-si, Gyeonggi-do 16677 (KR)**

(72) Inventors:
• **RAJADURAI, Rajavelsamy**
**Suwon-si, Gyeonggi-do, 16677 (KR)**
• **SASI, Nivedya Parambath**
**Suwon-si, Gyeonggi-do, 16677 (KR)**
• **ROHINI, Rajendran**
**Suwon-si, Gyeonggi-do, 16677 (IN)**

(74) Representative: **Gulde & Partner**
**Patent- und Rechtsanwaltskanzlei mbB**
**Berliner Freiheit 2**
**10785 Berlin (DE)**

(56) References cited:
**WO-A1-2021/094109    WO-A1-2021/109436**

• **SAMSUNG: "Support for AKMA Key Refresh Service Operation", vol. CT WG4, no. E-Meeting; 20210224 - 20210305, 15 February 2021 (2021-02-15), XP051977332, Retrieved from the Internet <URL:https://ftp.3gpp.org/tsg_ct/ WG4_protocollars_ex-CN4/ TSGCT4_102e_meeting/Docs/C4-211227.zip C4-211227.docx> [retrieved on 20210215]**
• **ERICSSON: "Solution #15 evaluation removal of EN", vol. SA WG3, no. Chongqing, China; 20191014 - 20191018, 7 October 2019 (2019-10-07), XP051810915, Retrieved from the Internet <URL:https://ftp.3gpp.org/tsg_sa/ WG3_Security/TSGS3_96AH_Chongqing/Docs/ S3-193597.zip S3-193597_Solution#15_removeEN.doc> [retrieved on 20191007]**

- SAMSUNG: "New solution on UPU based re-authentication Procedure", vol. SA WG3, no. e-meeting; 20220516 - 20220520, 9 May 2022 (2022-05-09), XP052195449, Retrieved from the Internet <URL:https://ftp.3gpp.org/tsg_sa/WG3_Security/TSGS3_107e/Docs/S3-221129.zip S3-221129-UPU based Re-authentication.doc> [retrieved on 20220509]
- SAMSUNG: "Discussion on Refresh of KAF & KAKMA", 3GPP DRAFT; S3-212073, 3RD GENERATION PARTNERSHIP PROJECT (3GPP), 10 May 2021 (2021-05-10), XP052005618
- "3rd Generation Partnership Project; Technical Specification Group Services and System Aspects; Authentication and Key Management for Applications (AKMA) based on 3GPP credentials in the 5G System (5GS) (Release 17)", 3GPP STANDARD; TECHNICAL SPECIFICATION; 3GPP TS 33.535, 3RD GENERATION PARTNERSHIP PROJECT (3GPP), 2 July 2021 (2021-07-02), pages 1 - 24, XP052030015

- S3: "Refresh of KAF and KAKMA", 3GPP DRAFT; S3-212074, 3RD GENERATION PARTNERSHIP PROJECT (3GPP), 10 May 2021 (2021-05-10), XP052005619
- ERICSSON: "Handling of AKMA keys in the UE", 3GPP DRAFT; S3-211912, 3RD GENERATION PARTNERSHIP PROJECT (3GPP), 10 May 2021 (2021-05-10), XP052005496

# EP 4 352 985 B1

**Description**

**[Technical Field]**

The present invention relates generally to an authentication in a wireless network, and more particularly, to a system and method for key generation in Authentication and Key Management for Applications (AKMA).

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation

3

capability by utilizing ultra-high-performance communication and computing resources.

3<sup>rd</sup> Generation Partnership Project (3GPP) Rel-16 introduces a new feature known as authentication and key management for applications (AKMA) which is based on 3GPP user's credentials in 5G. The AKMA leverages user's Authentication and Key Agreement (AKA) credentials to bootstrap security between a user equipment (UE) and an application function (AF), which allows the UE to securely exchange data with the AF.

According to the 3GPP, an AKMA key ($K_{AKMA}$) is refreshed or a new AKMA key is generated by performing a primary authentication as described in TS 33.535, and a AF key ($K_{AF}$) is refreshed or a new $K_{AF}$ is generated upon generating new $K_{AKMA}$. However, the $K_{AF}$ is associated with a timer which indicates a lifetime of the $K_{AF}$ When the lifetime of the $K_{AF}$ expires, the AF may reject the UE access to the AF. Upon the expiry of the $K_{AF}$ and if there has been a change of AUSF key ($K_{AUSF}$) due to a successful run of the primary authentication, the UE may re-try accessing the AF by using a new AKMA Key Identity (A-KID) derived from a new $K_{AUSF}$.

Thus, the $K_{AF}$ may not be refreshed immediately after the expiry of the lifetime of the $K_{AF}$, until a new primary authentication takes place. Therefore, a user may not be able to use an application (requiring authentication using AKMA) after the $K_{AF}$ expires and until the new primary authentication procedure takes place (which may happen after a very long period of time). However, the $K_{AF}$ should be refreshed when needed by applications that are depending on the $K_{AF}$ and hence a mechanism is required for the AKMA service to request network to provide the refreshing parameters to refresh the AKMA key and the AF key. Further, performing the primary authentication whenever there is a need to generate the new $K_{AF}$ requires a huge effort, as performing the primary authentication is a heavy approach which requires heavy computations and consuming a lot of memory.

As per 3GPP TS 33.535 the $K_{AF}$ can be refreshed over Ua*, however this not only depends on whether Ua* protocol supports such functionality, an operator or application may deliberately not want to implement $K_{AF}$ refresh over Ua*, and rather depend on AKMA validation by the network every time. If the key refresh is supported by the Ua* protocol then key refresh is performed independently, any number of times; which leads to the issue of exploiting the subscription credential(s) in 5G system and issues with lawful interception which is part of the regulatory requirements in certain regions.

The scenario in which the UE and the AAnF is having a KAF and the AF is having old $K_{AF}$ key or the AF derives the new Key based on Ua* protocol, whereas the UE doesn't know that it needs to derive the new key and use the latest key. In such cases the key synchronisation issue can occur, mainly due to misalignment of the context derived at different entities and non-coordination.

Thus, it is desired to address the above mentioned disadvantages or other shortcomings or at least provide a useful alternative.

The following prior art documents concern AKMA key generation:

- WO 2021/109436 A1;
- SAMSUNG: "Support for AKMA Key Refresh Service Operation", 3GPP DRAFT; C4-211227; and
- ERICSSON: "Solution #15 evaluation removal of EN", 3GPP DRAFT; S3-193597.

**[Disclosure of Invention]**

**[Technical Problem]**

The principal object of the embodiments herein is to provide a method of generating new Authentication and Key Management for Application (AKMA) key in a wireless network.

Another object of embodiments herein is to provide a system for generating at least one new Authentication and Key Management for Application (AKMA) key in a wireless network.

Another object of embodiments herein is to provide a system and method for Application key ($K_{AF}$) refresh by requesting the network to provide a refresh parameter to the UE on expiration or about to expire of application key $K_{AF}$.

Another object of embodiment herein is to provide a system and method to avoid the key synchronization issue when the key is refreshed either at UE or at network side.

Furthermore, the proposed method is used to support a mechanism to address the Key synchronisation issue at a User Equipment (UE) side.

**[Solution to Problem]**

Accordingly, the embodiments of the present invention are defined in the appended claims.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the scope thereof, and the embodiments herein include all such modifications.

**[Advantageous Effects of Invention]**

Embodiments of the present disclosure provides methods and apparatus for refreshing AKMA key and AF key without performing a primary authentication.

Embodiments of the present disclosure provides methods and apparatus for avoiding the key syncornization issue by defining a method where the AKMA Key ID indicates to the refreshed key.

**[Brief Description of Drawings]**

This method is illustrated in the accompanying drawings, throughout which like reference letters indicate corresponding parts in the various figures. The embodiments herein will be better understood from the following description with reference to the drawings, in which:

FIG. 1 illustrates a scenario of sequence flow of a method for establishing communication between a user equipment (UE) and an application function (AF), according to the prior arts;

FIG. 2 illustrates a block diagram of a network entity for generating a new AKMA key and a new AF key, according to the embodiments as disclosed herein;

FIG. 3 illustrates a block diagram of a user equipment for generating the new AKMA key and the new AF key, according to the embodiments as disclosed herein;

FIG. 4A and 4B are flow diagrams illustrating various operations implemented by the network entity for generating the new AKMA Key and the new AF Key, according to the embodiments as disclosed herein;

FIG. 4C is a flow diagram illustrating various operations implemented by the UE for generating the new AKMA Key and the new AF Key, according to the embodiments as disclosed herein;

FIG. 5 is an example sequential flow diagram illustrating generation of the new AKMA Key and associated AKMA Key Identifier, according to the embodiments as disclosed herein;

FIG. 6 is another example sequential flow diagram illustrating generation of the new AKMA key and associated AKMA Key Identifier, according to the embodiments as disclosed herein;

FIG. 7 is yet another example sequential flow diagram illustrating generation of the new AKMA Key and associated AKMA Key Identifier, according to the embodiments as disclosed herein;

FIG. 8 is yet another example sequential flow diagram illustrating generation of the new AKMA Key and associated AKMA Key Identifier, according to the embodiments as disclosed herein;

FIG. 9 is an example sequential flow diagram illustrating generation of a new AF Key, according to the embodiments as disclosed herein;

FIG. 10 is an example sequential flow diagram illustrating generation of the new AKMA Key based on a timer, according to the embodiments as disclosed herein; and

FIG. 11 is an example sequential flow diagram illustrating generation of the new AF Key based on a timer, according to the embodiments as disclosed herein.

**[Mode for the Invention]**

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits, or the like, and may optionally be driven by firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the invention. Likewise, the blocks of the embodiments may be physically combined into more complex blocks without departing from the scope of the invention.

The accompanying drawings are used to help easily understand various technical features and it should be understood that the embodiments presented herein are not limited by the accompanying drawings. Although the terms first, second, etc. may be used herein to describe various elements, these elements should not be limited by these terms. These terms are generally only used to distinguish one element from another.

The terms "electronic device", "user equipment", and "UE" mean the same and are used interchangeably throughout this document.

Accordingly the embodiment herein is to provide a method of generating new Authentication and Key Management for Application (AKMA) key by an Authentication Server Function (AUSF) in a wireless network. The method comprises receiving, by the AUSF, a first request from a Unified Data Management (UDM) in the wireless network, wherein the first request comprises a AKMA refresh parameter ($AKMA_{RP}$), and at least one Subscription Permanent Identifier (SUPI) associated with at least one User Equipment (UE) in the wireless network, and wherein the first request indicates a request to generate the at least one new AKMA key for establishing communication between the at least one User Equipment (UE) and at least one Application Function (AF) in the wireless network. The method also comprises generating, by the AUSF, the at least one new AKMA key and associated new AKMA Key Identifier based on the received first request. The method further comprises sending, by the AUSF, the generated at least one new AKMA key to an AKMA Anchor Function (AAnF) in the wireless network, wherein the AAnF is associated with the at least one AF.

In the conventional methods and systems, the AF key ($K_{AF}$) may not be refreshed immediately after its lifetime expiry, until a new primary authentication takes place. This means a user may not be able to use an application (requiring authentication using AKMA) after the $K_{AF}$ expires and until a new primary authentication procedure takes place (which may happen after a very long period of time). However, the $K_{AF}$ should be refreshed when needed by the applications that are depending on the $K_{AF}$ and hence a mechanism is required for the AKMA service to request the network to provide the refreshing parameters to refresh the AKMA key and the AF key. Further, performing primary authentication whenever there is a need to generate a new $K_{AF}$ requires a huge effort, as performing the primary authentication is a heavy approach. Unlike to the conventional methods and systems, in the present disclosure the new AF key is generated without requiring to perform any primary authentication.

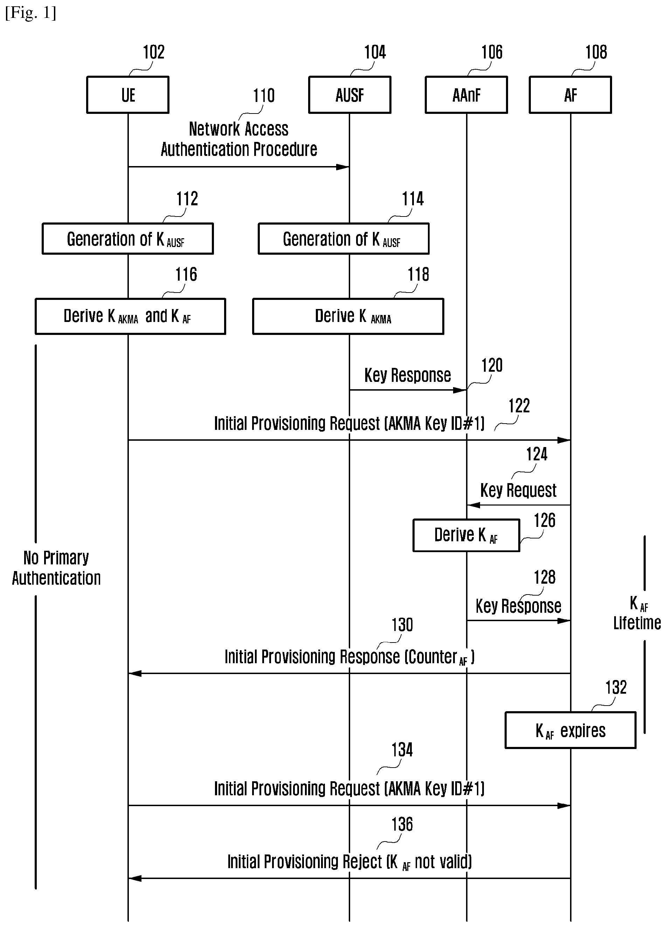

Referring now to the drawings and more particularly to FIGS. 1 through 11, where similar reference characters denote corresponding features consistently throughout the figures, there are shown preferred embodiments.

FIG. 1 illustrates a scenario of sequence flow of a method for establishing communication between a user equipment (UE) and an application function (AF), according to the prior arts. As shown in FIG. 1, at step 110, the UE 102 initiates a network access authentication procedure by making a request to an AUSF 104 to register the UE 102 for the AKMA services. At step 112, when the network access authentication procedure is completed, the UE 102 generates an AUSF key ($K_{AUSF}$). Similarly, at step 114, the AUSF 104 also generates the AUSF key ($K_{AUSF}$). At step 116, the UE 102 derives an AKMA key ($K_{AKMA}$) 116 based on the KAUSF generated. The UE 102 then derives an AF key ($K_{AF}$) using the $K_{AKMA}$. Similarly, at step 118, the AUSF 104 derives $K_{AKMA}$ based on the $K_{AUSF}$ generated. Upon the $K_{AKMA}$ is derived, at step 120, the AUSF 104 sends a key response to an AAnF 106. At step 122, the UE 102 then initiates an application session establishment request using A-KID1 112. At step 124, the AF 108 upon receiving the application session establishment request from the UE 102 will send a key request to the AAnF 106. At step 126, the AAnF 10 then derives the $K_{AF}$ 126 using the A-KID1. At step 128, the AAnF 106, upon generating the $K_{AF}$, sends a key response to the AF 108. At step 130, the AF 108 sends an initial provisioning response which includes $Counter_{AF}$ to the UE 102. Upon the expiry of $K_{AF}$, at step 132 and 134, when the UE 102 send the initial provisioning request using the previous A-KID 1, the AF 108 rejects the request as the KAF associated with A-KID is not valid. At step 136, the AF 108 cannot provide application access to the UE 102 and a new $K_{AF}$ for the AF cannot be generated until next primary authentication takes place as per conventional method. Thus, the UE 102 may not be able to use an application requiring the AKMA service from the AF 108.

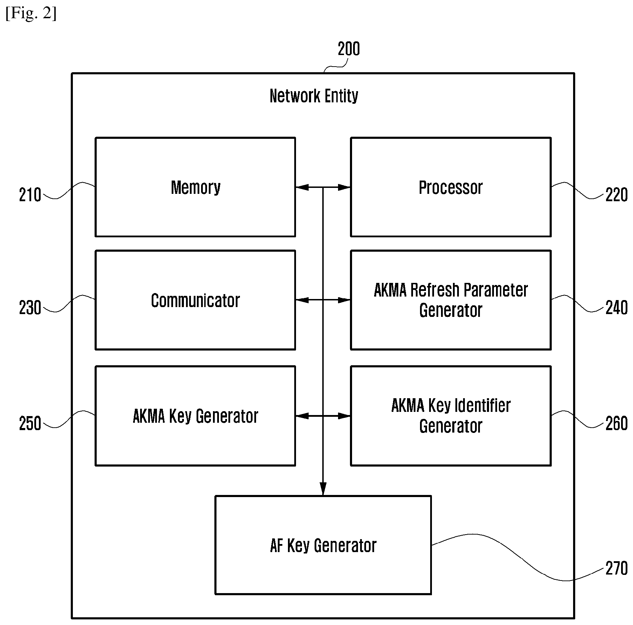

FIG. 2 illustrates a block diagram of the network entity 200 for generating a new AKMA key and a new AF key, according to the embodiments as disclosed herein. In an embodiment, the network entity 200 includes a memory 210, a processor 220, a communicator 230, a AKMA refresh parameter generator 240, a AKMA key generator 250, a AKMA key identifier generator 260, and a AF key generator 280. In an embodiment, the network entity 200 comprises an AMF 201, an AUSF 202, a UDM 203, an AAnF 204, and an AF 205 (not shown in the FIG. 2). In another embodiment, the network entity 200 can be one of the AMF 201, the AUSF 202, the UDM 203, the AAnF 204, and the AF 205.

The memory 210 also stores instructions to be executed by the processor 220. The memory 210 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 210 may, in some examples, be considered a non-transitory storage medium. The term "non-transitory" may indicate that the storage medium is not embodied in a carrier wave or a propagated signal. However, the term "non-transitory" should not be interpreted that the memory 210 is non-movable. In some examples, the memory 210 can be configured to store larger amounts of information than the memory. In certain examples, a non-transitory storage medium may store data that can, over time, change (e.g., in Random Access Memory (RAM) or cache). In an embodiment, the memory 210 can be an internal storage unit or it can be an external storage unit of the network entity 200, a cloud storage, or any other type of external storage.

The processor 220 communicates with the memory 210, the communicator 230, the AKMA refresh parameter generator 240, the AKMA key generator 250, the AKMA key identifier generator 260, and the AF key generator 270. The processor 220 is configured to execute instructions stored in the memory 210 and to perform various processes. The communicator 230 is configured for communicating internally between internal hardware components and with external devices via one or more networks.

In an embodiment, the AKMA refresh parameter generator 240 generates an AKMA refresh parameter $(AKMA_{RP})$. The $AKMA_{RP}$ can be generated by one of the AUSF 202, the UDM 203, and the AAnF 204 based on an AKMA refresh indication request received. In one embodiment, the $AKMA_{RP}$ can be a random (RAND) value, a $Counter_{AKMA}$, and a $Counter_{AF}$ value.

In an embodiment, the AKMA key generator 250 generates a new AKMA key $(K_{AKMA}')$. The AKMA key generator 250 generates the new AKMA key $(K_{AKMA}')$ based on an AKMA, an AUSF key $(K_{AUSF})$, an AKMA refresh parameter $(AKMA_{RP})$, and at least one SUPI associated with a UE 102. In one embodiment, the new AKMA key $(K_{AKMA}')$ is generated by inputting the AKMA, the AUSF key $(K_{AUSF})$, the AKMA refresh parameter $(AKMA_{RP})$, and the at least one SUPI associated with the UE 102 to a key distribution function (KDF) as shown in eq. (1).

$$K_{AKMA}' = KDF\ (SUPI,\ K_{AUSF},\ "AKMA",\ AKMA_{RP})\ ...\ (1)$$

In an embodiment, the AKMA key identifier generator 260 generates a new AKMA key identifier (A-KID'). The AKMA key identifier generator 260 generates the new AKMA key identifier (A-KID') by generating a new AKMA temporary identifier (A-TID'). The AKMA key identifier generator 260 generates the new AKMA temporary identifier (A-TID') based on the AUSF key $(K_{AUSF})$, a present AKMA temporary identifier (A-TID), the AKMA refresh parameter $(AKMA_{RP})$, and the at least one SUPI associated with UE 300 102. In one embodiment, the AKMA key identifier generator 260 generates the new AKMA temporary identifier (A-TID') by inputting the AUSF key $(K_{AUSF})$, the present AKMA temporary identifier (A-TID), the AKMA refresh parameter $(AKMA_{RP})$, and the at least one SUPI associated with UE 300 to the KDF as shown in eq. (2).

$$A\text{-}TID' = KDF\ ("A\text{-}TID",\ K_{AUSF},\ AKMA_{RP},\ SUPI)\ ......\ (2)$$

In an embodiment, the AF key generator 270 generates a new Application Function (AF) key. The AF key generator 270 generates the new Application Function (AF) key based on the AKMA key $(K_{AKMA})$, an identifier of at least one AF (AF-ID), and the AKMA refresh parameter $(AKMA_{RP})$. In one embodiment, the AF key generator 280 generates the new Application Function (AF) key $(K_{AF})$ by inputting at least one of the AKMA key $(K_{AKMA})$, the identifier of at least one AF (AF-ID), and the AKMA refresh parameter $(AKMA_{RP})$ to the KDF as shown in eq. (3).

$$K_{AF}' = KDF\ (K_{AKMA},\ AF\text{-}ID,\ AKMA_{RP})\ ...\ (3)$$

Although the FIG. 2 shows various hardware components of the network entity 200 but it is to be understood that other embodiments are not limited thereon. In other embodiments, the network entity 200 may include less or more number of components. Further, the labels or names of the components are used only for illustrative purpose and does not limit the scope of the invention. One or more components can be combined together to perform same or substantially similar function to generate the new AKMA key and the new AF key for establishing communication between the UE 102 and the AF 205 in the wireless network.

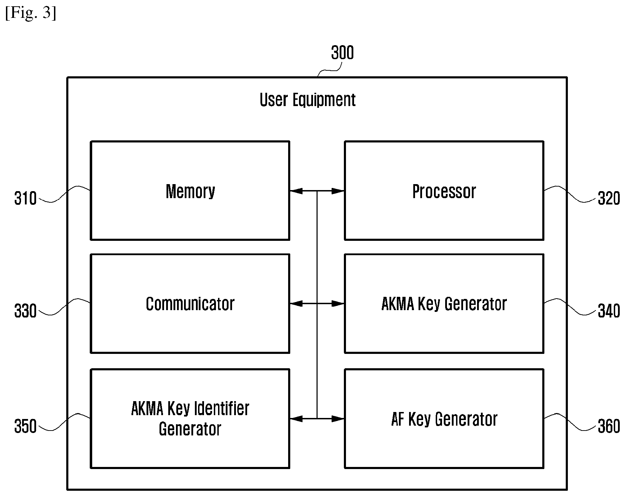

FIG. 3 illustrates a block diagram of the UE 300 for generating the new AKMA key and the new AF key, according to the embodiments as disclosed herein. In an embodiment, the user equipment 300 includes a memory 310, a processor 320, a communicator 330, an AKMA key generator 340, an AKMA key identifier generator 350, and an AF key generator 360.

The memory 310 also stores instructions to be executed by the processor 320. The memory 310 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 310 may, in some examples, be considered a non-transitory storage medium. The term "non-transitory" may indicate that the storage medium is not embodied in a carrier wave or a propagated signal. However, the term "non-transitory" should not be interpreted that the memory 310 is non-movable. In some examples, the memory 310 can be configured to store larger amounts of information than the memory. In certain examples, a non-transitory storage medium may store data that can, over time, change (e.g., in Random Access Memory (RAM) or cache). In an embodiment, the memory 310 can be an internal storage unit or it can be an external storage unit of the User Equipment (UE) 300, a cloud storage, or any other type of external storage.

The processor 320 communicates with the memory 310, the communicator 330, the AKMA key generator 340, the AKMA key identifier generator 350, and the AF key generator 380. The processor 320 is configured to execute instructions stored in the memory 310 and to perform various processes. The communicator 330 is configured for communicating internally between internal hardware components and with external devices via one or more networks.

In an embodiment, the AKMA key generator 340 generates a new AKMA key ($K_{AKMA}'$). The AKMA key generator 360 generates the new AKMA key ($K_{AKMA}'$) based on an AKMA, an AUSF key ($K_{AUSF}$), an AKMA refresh parameter ($AKMA_{RP}$), and at least one SUPI associated with the UE 300. In one embodiment, the new AKMA key ($K_{AKMA}'$) is generated by inputting the AKMA, the AUSF key ($K_{AUSF}$), the AKMA refresh parameter ($AKMA_{RP}$), and the at least one SUPI associated with the UE 300 to a key distribution function (KDF) as shown in eq. (1).

In an embodiment, the AKMA key identifier generator 350 generates a new AKMA key identifier (A-KID'). The AKMA key identifier generator 370 generates the new AKMA key identifier (A-KID') by generating a new AKMA temporary identifier (A-TID'). The AKMA key identifier generator 370 generates the new AKMA temporary identifier (A-TID') based on the AUSF key ($K_{AUSF}$), the present AKMA temporary identifier (A-TID), the AKMA refresh parameter ($AKMA_{RP}$), and the at least one SUPI associated with the UE 300. In one embodiment, the AKMA key identifier generator 370 generates the new AKMA temporary identifier (A-TID') by inputting the AUSF key ($K_{AUSF}$), the present AKMA temporary identifier (A-TID), the AKMA refresh parameter ($AKMA_{RP}$), and the at least one SUPI associated with the UE 300 to the KDF as shown in eq. (2).

In an embodiment, the AF key generator 360 generates a new Application Function key ($K_{AF}'$). The AF key generator 360 generates the new Application Function ($K_{AF}'$) key based on the new AKMA key ($K_{AKMA}'$), an identifier of the AF 205 (AF-ID), and the AKMA refresh parameter ($AKMA_{RP}$). In one embodiment, the AF key generator 360 generates the new Application Function ($K_{AF}'$) key by inputting at least one of the new AKMA key ($K_{AKMA}'$), the identifier of at least one AF (AF-ID), and the AKMA refresh parameter ($AKMA_{RP}$) to the KDF as shown in eq. (3).

Although the FIG. 3 shows various hardware components of the user equipment 300 but it is to be understood that other embodiments are not limited thereon. In other embodiments, the user equipment 300 may include less or more number of components. Further, the labels or names of the components are used only for illustrative purpose and does not limit the scope of the invention. One or more components can be combined together to perform same or substantially similar function to generate the new AKMA key and the new AF key for establishing communication between the UE 300 and the application function (AF) in the wireless network.

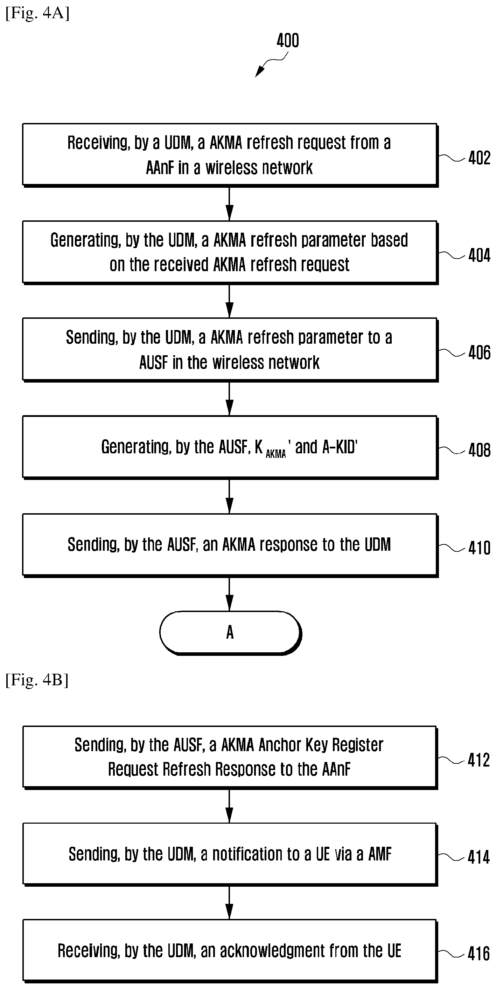

FIG. 4A and 4B are flow diagrams illustrating various operations implemented by the network entity 200 for generating the new AKMA Key and the new AF Key, according to the embodiments as disclosed herein.

At 402, the method includes receiving, by the UDM 203, the AKMA refresh request from the AAnF 204. In one embodiment, the AKMA refresh request received from the AAnF 204 includes an AKMA refresh indicator and the at least one SUPI associated with the at least one user equipment (UE) 300.

At block 404, the method includes generating, by the UDM 203, an AKMA refresh parameter based on the received AKMA refresh request. In one embodiment, the AKMA refresh parameter generator 240 generates the AKMA refresh parameter ($AKMA_{RP}$). The $AKMA_{RP}$ can be generated by one of the AUSF 202, the UDM 203, and the AAnF 204 based on the AKMA refresh indication request received. In one embodiment, the $AKMA_{RP}$ can be at least one of the random (RAND) value, the $Counter_{AKMA}$, and the $Counter_{AF}$ value.

At block 406, the method includes sending, by the UDM 203, the AKMA refresh parameter ($AKMA_{RP}$) to the AUSF 202. In one embodiment, the UDM 203 sends the AKMA refresh parameter ($AKMA_{RP}$) along with the at least one SUPI associated with the UE 300 300 to the AUSF 202.

At block 408, the method includes generating, by the AUSF 202, the new AKMA key ($K_{AKMA}'$) and associated new AKMA key identifier (A-KID'). In an embodiment, the AKMA key generator 250 generates the new AKMA key ($K_{AKMA}'$). The AKMA key generator 250 generates the new AKMA key ($K_{AKMA}'$) based on the AKMA, the AUSF key ($K_{AUSF}$), the AKMA refresh parameter ($AKMA_{RP}$), and the at least one SUPI associated with the UE 300. In one embodiment, the new AKMA key ($K_{AKMA}'$) is generated by inputting the AKMA, the AUSF key ($K_{AUSF}$), the AKMA refresh parameter ($AKMA_{RP}$), and the at least one SUPI associated with the UE 300 to the KDF as shown in eq. (1). Further, in another embodiment, the AKMA key identifier generator 260 generates the new AKMA key identifier (A-KID'). The AKMA key identifier generator 260 generates the new AKMA key identifier (A-KID') by generating the new AKMA temporary identifier (A-TID'). The AKMA key identifier generator 260 generates the new AKMA temporary identifier (A-TID') based on the AUSF key ($K_{AUSF}$), the present AKMA temporary identifier (A-TID), the AKMA refresh parameter ($AKMA_{RP}$), and the at least one SUPI associated with the UE 300. In one embodiment, the AKMA key identifier generator 260 generates the new AKMA temporary identifier (A-TID') by inputting the AUSF key ($K_{AUSF}$), the present AKMA temporary identifier (A-TID), the AKMA refresh parameter ($AKMA_{RP}$), and the at least one SUPI associated with the UE 300 to the KDF as shown in eq. (2).

At block 410, the method includes sending, by the AUSF 202, an AKMA response to the UDM 203. In one embodiment, the AUSF 202 sends the AKMA refresh response to the UDM 203. The AKMA refresh response includes an acknowledgment for the AKMA refresh request received from the UDM 203. The AKMA refresh response also includes AKMA MAC-I$_{AUSF}$ and Counter$_{AKMA}$.

At block 412, the method includes sending, by the AUSF 202, an AKMA Anchor Key Register Request Refresh Response to the AAnF 204. In one embodiment, the AUSF 202 sends the AKMA Anchor Key Register Request Refresh Response to the AAnF 204. In one embodiment, the AKMA Anchor Key Register Request Refresh Response includes the new AKMA key (K$_{AKMA}$'), the at least one SUPI associated with UE 300, and the new AKMA key identifier (A-KID').

At block 414, the method includes sending, by the UDM 203, a notification to the UE 300 via the AMF 201. In one embodiment, the UDM 203 sends the notification to the UE 300 via the AMF 201. The notification includes at least one of the AKMA refresh parameter (AKMA$_{RP}$), the AKMA MAC-I$_{AUSF}$, and the Counter$_{AKMA}$.

At block 416, the method includes receiving, by the UDM 203, an acknowledgment from the UE 300 via the AMF 201. In one embodiment, the UDM 203 receives the acknowledgment from the UE 300.

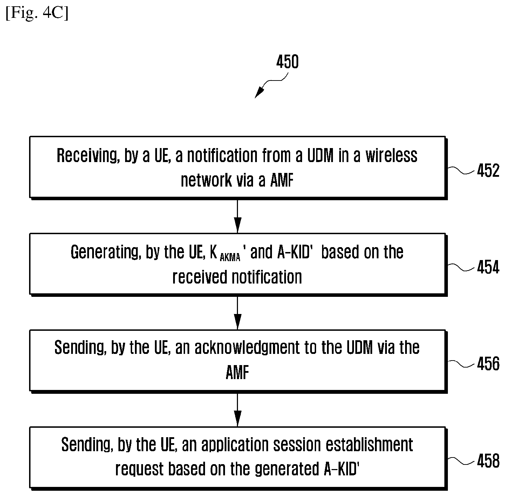

FIG. 4C is a flow diagram illustrating various operations implemented by the UE 300 for generating the new AKMA Key and the new AF Key, according to the embodiments as disclosed herein.

At block 452, the method includes receiving, by the UE 300, a notification from the UDM 203. In one embodiment, the UE 300 receives the notification from the UDM 203. In one embodiment, the UE 300 receives the notification from the UDM 203 via the AMF 201. The notification includes at least one of AKMA refresh parameter (AKMA$_{RP}$), AKMA MAC-I$_{AUSF}$, and Counter$_{AKMA}$.

At block 454, the method includes generating, by the UE 300, a new AKMA key and associated AKMA key identifier (A-KID) based on the received notification. In an embodiment, the AKMA key generator 340 generates a new AKMA key (K$_{AKMA}$'). The AKMA key generator 340 generates the new AKMA key (K$_{AKMA}$') based on the AKMA, the AUSF key (K$_{AUSF}$), the AKMA refresh parameter (AKMA$_{RP}$), and at least one SUPI associated with the UE 300. In one embodiment, the new AKMA key (K$_{AKMA}$') is generated by inputting the AKMA, the AUSF key (K$_{AUSF}$), the AKMA refresh parameter (AKMA$_{RP}$), and the at least one SUPI associated with the UE 300 to the KDF as shown in eq. (1). Further, in another embodiment, the AKMA key identifier generator 350 generates the new AKMA key identifier (A-KID'). The AKMA key identifier generator 370 generates the new AKMA key identifier (A-KID') by generating the new AKMA temporary identifier (A-TID'). The AKMA key identifier generator 370 generates the new AKMA temporary identifier (A-TID') based on the AUSF key (K$_{AUSF}$), the present AKMA temporary identifier (A-TID), the AKMA refresh parameter (AKMA$_{RP}$), and the at least one SUPI associated with the UE 300. In one embodiment, the AKMA key identifier generator 350 generates the new AKMA temporary identifier (A-TID') by inputting the AUSF key (K$_{AUSF}$), the present AKMA temporary identifier (A-TID), the AKMA refresh parameter (AKMA$_{RP}$), and the at least one SUPI associated with the UE 300 to the KDF as shown in eq. (2).

At 456, the method includes sending, by the UE 300, an acknowledgment to the UDM 203. In one embodiment, the UE 300 sends the acknowledgment to the UDM 203 via the AMF 201.

At 458, the method includes sending, by the UE 300, an application session establishment request to the AF 205. In one embodiment, the UE 300 sends the application session establishment request to the AF 205 based on the new AKMA key identifier (A-KID').

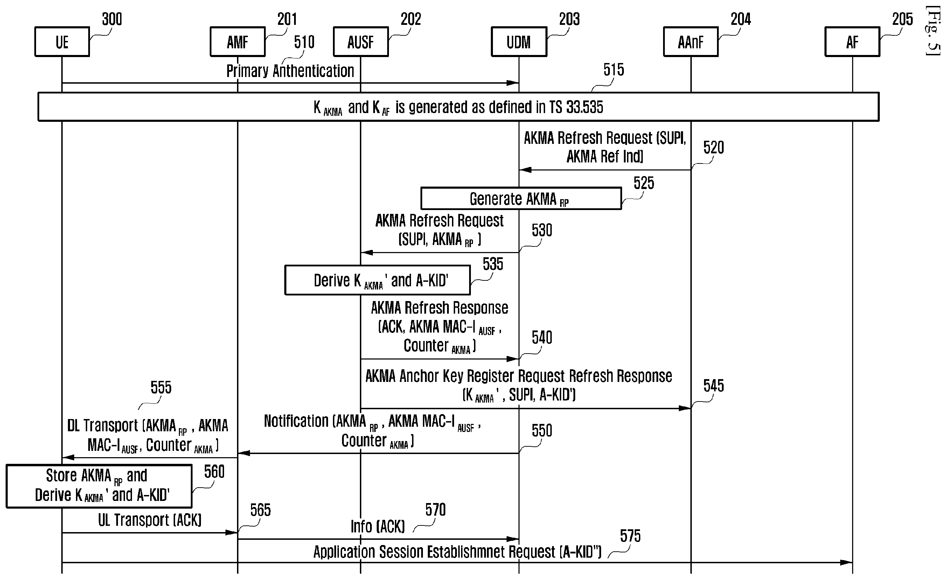

FIG. 5 is an example sequential flow diagram illustrating generation of the new AKMA Key and associated AKMA Key Identifier, according to the embodiments as disclosed herein.

At 510, the UE 300 performs a primary authentication with network entity by registering with the UDM 203. After performing the primary authentication the UE 300 and the AUSF 202 will derive the AUSF Key (K$_{AUSF}$) as specified in TS 33.501.

At 515, the UE 300 and the AF 205 will derive the K$_{AKMA}$ and K$_{AF}$ as per TS 33.535.

At 520, the AAnF 204 sends the AKMA refresh request to the UDM 203. In one embodiment, the AKMA refresh request received from the AAnF 204 includes an AKMA refresh indicator and at least one SUPI associated with the UE 300.

At 525, the UDM 203 generates the AKMA refresh parameter based on the received AKMA refresh request. In one embodiment, the AKMA refresh parameter generator 240 generates an AKMA refresh parameter (AKMA$_{RP}$). The AKMA$_{RP}$ can be generated by one of AUSF 202, UDM 203, and AAnF 204 based on an AKMA refresh indication request received. In one embodiment, the AKMA$_{RP}$ can be at least one of a random (RAND) value, a Counter$_{AKMA}$, and a Counter$_{AF}$ value.

At 530, the UDM 203 sends the AKMA refresh parameter to the AUSF 202. In one embodiment, the UDM 203 sends the AKMA refresh parameter (AKMA$_{RP}$) along with at least one SUPI associated with the UE 300 to the AUSF 202.

At 535, the AUSF 202 generates the new AKMA key (K$_{AKMA}$') and associated AKMA key identifier (A-KID'). In an embodiment, the AKMA key generator 250 generates the new AKMA key (K$_{AKMA}$'). The AKMA key generator 250 generates the new AKMA key (K$_{AKMA}$') based on the AKMA, the AUSF key (K$_{AUSF}$), the AKMA refresh parameter (AKMA$_{RP}$), and the at least one SUPI associated with the UE 300. In one embodiment, the new AKMA key (K$_{AKMA}$') is generated by inputting the AUSF key (K$_{AUSF}$), the AKMA refresh parameter (AKMA$_{RP}$), "AKMA" and the at least one SUPI associated with the UE 300 to the KDF as shown in eq. (1). Further, in another embodiment, the AKMA key identifier generator 260 generates the new AKMA key identifier (A-KID'). The AKMA key identifier generator 260 generates the new AKMA key identifier (A-KID') by generating the new AKMA temporary identifier (A-TID'). The AKMA key identifier generator 260 generates the new AKMA temporary identifier (A-TID') based on the AUSF key ($K_{AUSF}$), "A-TID", the AKMA refresh parameter ($AKMA_{RP}$), and the at least one SUPI associated with the UE 300. In one embodiment, the AKMA key identifier generator 260 generates the new AKMA temporary identifier (A-TID') by inputting the AUSF key ($K_{AUSF}$), "A-TID", the AKMA refresh parameter ($AKMA_{RP}$), and the at least one SUPI associated with the UE 300 to the KDF as shown in eq. (2).

At 540, the AUSF 202 sends an AKMA response to the UDM 203. In one embodiment, the AUSF 202 send the AKMA refresh response to the UDM 203. The AKMA refresh response includes an acknowledgment for the AKMA refresh request received from the UDM 203. The AKMA refresh response also includes AKMA MAC-$I_{AUSF}$ and Counter$_{AKMA}$.

At 545, the AUSF 202 sends an AKMA Anchor Key Register Request Refresh Response to the AAnF 204. In one embodiment, the AUSF 202 send the AKMA Anchor Key Register Request Refresh Response to the AAnF 204. In one embodiment, the AKMA Anchor Key Register Request Refresh Response includes the new AKMA key ($K_{AKMA}$'), the at least one SUPI associated with the UE 300, and the new AKMA key identifier (A-KID').

At 550, the UDM 203 sends a notification to the AMF 201. In one embodiment, the UDM 203 sends the notification to the AMF 201. The notification includes at least one of AKMA refresh parameter ($AKMA_{RP}$), AKMA MAC-$I_{AUSF}$, and Counter$_{AKMA}$.

At 555, the AMF 201 sends a notification to the UE 300. In one embodiment, the AMF 201 sends the notification to the UE 300. The notification includes the at least one of AKMA refresh parameter ($AKMA_{RP}$), the AKMA MAC-$I_{AUSF}$, and the Counter$_{AKMA}$.

At 560, the UE 300 generates the new AKMA key and associated AKMA key identifier (A-KID) based on the received notification. In an embodiment, the AKMA key generator 340 generates the new AKMA key ($K_{AKMA}$'). The AKMA key generator 340 generates the new AKMA key ($K_{AKMA}$') based on the AUSF key ($K_{AUSF}$), "AKMA", the AKMA refresh parameter ($AKMA_{RP}$), and the at least one SUPI associated with the UE 300. In one embodiment, the new AKMA key ($K_{AKMA}$') is generated by inputting the AKMA, the AUSF key ($K_{AUSF}$), the AKMA refresh parameter ($AKMA_{RP}$), and the at least one SUPI associated with the UE 300 to the KDF as shown in eq. (1). Further, in another embodiment, the AKMA key identifier generator 370 generates the new AKMA key identifier (A-KID'). The AKMA key identifier generator 350 generates the new AKMA key identifier (A-KID') by generating the new AKMA temporary identifier (A-TID'). The AKMA key identifier generator 350 generates the new AKMA temporary identifier (A-TID') based on the AUSF key ($K_{AUSF}$), "A-TID", the AKMA refresh parameter ($AKMA_{RP}$), and the at least one SUPI associated with UE 300. In one embodiment, the AKMA key identifier generator 350 generates the new AKMA temporary identifier (A-TID') by inputting the AUSF key ($K_{AUSF}$), the present AKMA temporary identifier (A-TID), the AKMA refresh parameter ($AKMA_{RP}$), and the at least one SUPI associated with UE 300 to the key distribution function as shown in eq. (2).

At 565, the UE 300 sends an acknowledgment to the AMF 201. In one embodiment, the UE 300 sends the acknowledgment to the AMF 201.

At 570, the AMF 201 sends an acknowledgment to the UDM 203. In one embodiment, the AMF 201 sends the acknowledgment to the UDM 203.

At 575, the UE 300 sends an application session establishment request to the AF 205. In one embodiment, the UE 300 sends the application session establishment request to the AF 205 based on the new AKMA key identifier (A-KID').

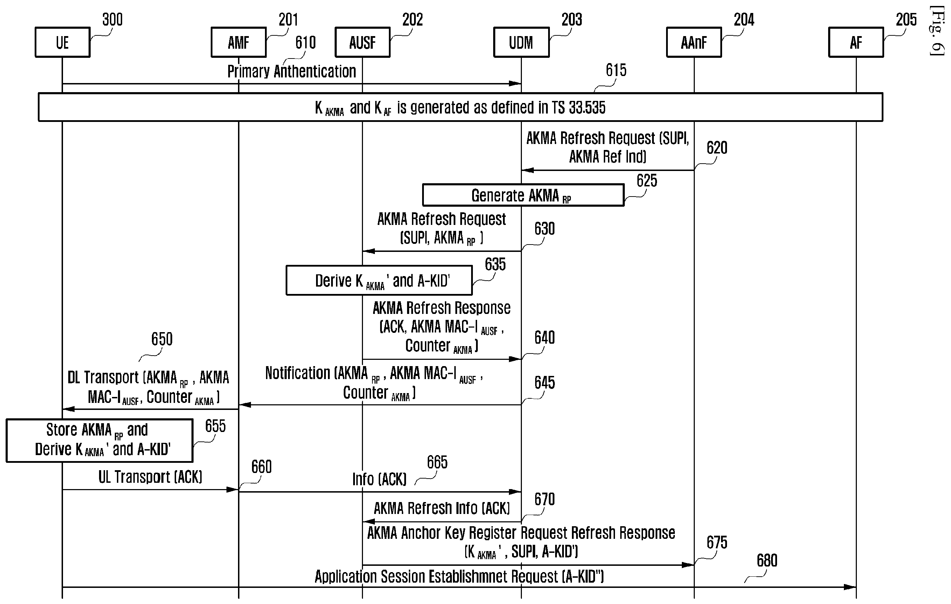

FIG. 6 is another example sequential flow diagram illustrating generation of the new AKMA Key and associated AKMA Key Identifier, according to the embodiments as disclosed herein.

At 610, the UE 300 performs a primary authentication with network entity by registering with the UDM 203. After performing the primary authentication the UE 300 and AUSF 202 will derive the AUSF Key ($K_{AUSF}$) as specified in TS 33.501.

At 615, the UE 300 and the AF 205 will derive the $K_{AKMA}$ and the $K_{AF}$ as per TS 33.535.

At 620, the AAnF 204 sends an AKMA refresh request to the UDM 203. In one embodiment, the AKMA refresh request received from the AAnF 204 includes an AKMA refresh indicator and at least one SUPI associated with the at least one user equipment (UE).

At 625, the UDM 203 generates an AKMA refresh parameter based on the received AKMA refresh request. In one embodiment, the AKMA refresh parameter generator 240 generates the AKMA refresh parameter ($AKMA_{RP}$). The $AKMA_{RP}$ can be generated by one of the AUSF 202, the UDM 203, and the AAnF 204 based on an AKMA refresh indication request received. In one embodiment, the $AKMA_{RP}$ can be at least one of the random (RAND) value, the Counter$_{AKMA}$, and the Counter$_{AF}$ value.

At 630, the UDM 203 sends the AKMA refresh parameter to the AUSF 202. In one embodiment, the UDM 203 sends the AKMA refresh parameter ($AKMA_{RP}$) along with at least one SUPI associated with UE 300 to the AUSF 202.

At 635, the AUSF 202 generates the new AKMA key ($K_{AKMA}$') and associated AKMA key identifier (A-KID'). In an embodiment, the AKMA key generator 250 generates the new AKMA key ($K_{AKMA}$'). The AKMA key generator 250 generates the new AKMA key ($K_{AKMA}$') based on the AUSF key ($K_{AUSF}$), "AKMA", the AKMA refresh parameter ($AKMA_{RP}$), and the at least one SUPI associated with the UE 300. In one embodiment, the new AKMA key ($K_{AKMA}$') is generated by inputting the AKMA, the AUSF key ($K_{AUSF}$), the AKMA refresh parameter ($AKMA_{RP}$), and the at least one SUPI associated with the UE 300 to the KDF as shown in eq. (1). Further, in another embodiment, the AKMA key identifier generator 260 generates the new AKMA key identifier (A-KID'). The AKMA key identifier generator 260 generates the new AKMA key identifier (A-KID') by generating the new AKMA temporary identifier (A-TID'). The AKMA key identifier generator 260 generates the new AKMA temporary identifier (A-TID') based on the AUSF key ($K_{AUSF}$), "A-TID", the AKMA refresh parameter ($AKMA_{RP}$), and the at least one SUPI associated with UE 300. In one embodiment, the AKMA key identifier generator 260 generates the new AKMA temporary identifier (A-TID') by inputting the AUSF key ($K_{AUSF}$), the present AKMA temporary identifier (A-TID), the AKMA refresh parameter ($AKMA_{RP}$), and the at least one SUPI associated with UE 300 to the KDF as shown in eq. (2).

At 640, the AUSF 202 sends an AKMA response to the UDM 203. In one embodiment, the AUSF 202 sends the AKMA refresh response to the UDM 203. The AKMA refresh response includes an acknowledgment for the AKMA refresh request received from the UDM 203. The AKMA refresh response also includes the AKMA MAC-I$_{AUSF}$ and the Counter$_{AKMA}$.

At 645, the UDM 203 sends a notification to the AMF 201. In one embodiment, the UDM 203 sends the notification to the AMF 201. The notification includes at least one of the AKMA refresh parameter ($AKMA_{RP}$), the AKMA MAC-I$_{AUSF}$, and the Counter$_{AKMA}$.

At 650, the AMF 201 sends a notification to the UE 300. In one embodiment, the AMF 201 sends the notification to the UE 300. The notification includes at least one of the AKMA refresh parameter ($AKMA_{RP}$), the AKMA MAC-I$_{AUSF}$, and the Counter$_{AKMA}$.

At 655, the UE 300 generates the new AKMA key and associated AKMA key identifier (A-KID) based on the received notification. In an embodiment, the AKMA key generator 340 generates the new AKMA key ($K_{AKMA}$'). The AKMA key generator 340 generates the new AKMA key ($K_{AKMA}$') based on the AUSF key ($K_{AUSF}$), "AKMA" the AKMA refresh parameter ($AKMA_{RP}$), and the at least one SUPI associated with UE 300. In one embodiment, the new AKMA key ($K_{AKMA}$') is generated by inputting the AKMA, the AUSF key ($K_{AUSF}$), the AKMA refresh parameter ($AKMA_{RP}$), and the at least one SUPI associated with the UE 300 to the KDF as shown in eq. (1). Further, in another embodiment, the AKMA key identifier generator 350 generates the new AKMA key identifier (A-KID'). The AKMA key identifier generator 350 generates the new AKMA key identifier (A-KID') by generating the new AKMA temporary identifier (A-TID'). The AKMA key identifier generator 350 generates the new AKMA temporary identifier (A-TID') based on the AUSF key ($K_{AUSF}$), "A-TID", the AKMA refresh parameter ($AKMA_{RP}$), and the at least one SUPI associated with UE 300. In one embodiment, the AKMA key identifier generator 350 generates the new AKMA temporary identifier (A-TID') by inputting the AUSF key ($K_{AUSF}$), the present AKMA temporary identifier (A-TID), the AKMA refresh parameter ($AKMA_{RP}$), and the at least one SUPI associated with UE 300 to the KDF as shown in eq. (2).

At 660, the UE 300 sends an acknowledgment to the AMF 201. In one embodiment, the UE 300 sends the acknowledgment to the AMF 201.

At 665, the UDM 203 sends a refresh information to the AUSF 202. In one embodiment, the UDM 203 sends the refresh information to the AUSF 202 that includes an acknowledgment about reception of acknowledgment from the AMF 201.

At 670, the AMF 201 sends an acknowledgment to the UDM 203. In one embodiment, the AMF 201 sends the acknowledgment to the UDM 203.

At 675, the AUSF 202 sends an AKMA Anchor Key Register Request Refresh Response to the AAnF 204. In one embodiment, the AUSF 202 sends the AKMA Anchor Key Register Request Refresh Response to the AAnF 204. In one embodiment, the AKMA Anchor Key Register Request Refresh Response includes the new AKMA key ($K_{AKMA}$'), the at least one SUPI associated with UE 300, and the new AKMA key identifier (A-KID').

At 680, the UE 300 sends an application session establishment request to the AF 205. In one embodiment, the UE 300 sends the application session establishment request to the AF 205 based on the new AKMA key identifier (A-KID').

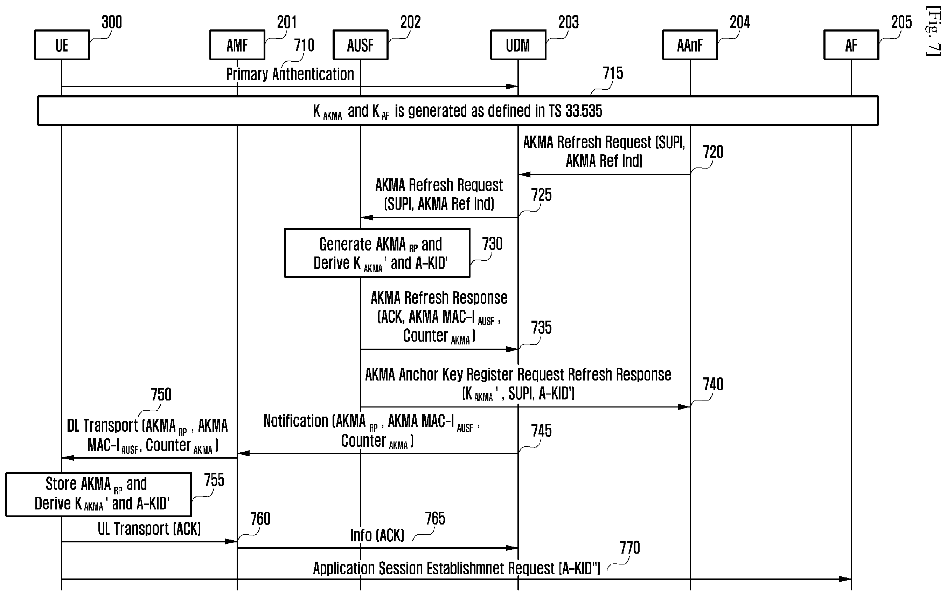

FIG. 7 is an example sequential flow diagram illustrating generation of a new AKMA Key and associated AKMA Key Identifier, according to the embodiments as disclosed herein.

At 710, the UE 300 performs a primary authentication with network entity by registering with the UDM 203. After performing the primary authentication, the UE 300 and the AUSF 202 will derive the AUSF Key ($K_{AUSF}$) as specified in TS 33.501.

At 715, the UE 300 and the AF 205 will derive the $K_{AKMA}$ and $K_{AF}$ as per TS 33.535.

At 720, the AAnF 204 sends an AKMA refresh request to the UDM 203. In one embodiment, the AKMA refresh request received from the AAnF 204 includes the AKMA refresh indicator and the at least one SUPI associated with the at least one user equipment (UE).

At 725, the UDM 203 sends the AKMA refresh request to the AUSF 202. In one embodiment, the UDM 203 sends the AKMA refresh request along with the at least one SUPI associated with the UE 300 to the AUSF 202.

At 730, the AUSF 202 generates the AKMA refresh parameter ($AKMA_{RP}$), the new AKMA key ($K_{AKMA}$') and associated AKMA key identifier (A-KID'). In one embodiment, the AKMA refresh parameter generator 240 generates the AKMA refresh parameter ($AKMA_{RP}$). In one embodiment, the $AKMA_{RP}$ can be at least one of the random (RAND) value, the $Counter_{AKMA}$, and the $Counter_{AF}$ value. In an embodiment, the AKMA key generator 250 generates the new AKMA key ($K_{AKMA}$'). The AKMA key generator 250 generates the new AKMA key ($K_{AKMA}$'), the AUSF key ($K_{AUSF}$), "AKMA", the AKMA refresh parameter ($AKMA_{RP}$), and the at least one SUPI associated with UE 300. In one embodiment, the new AKMA key ($K_{AKMA}$') is generated by inputting the AKMA, the AUSF key ($K_{AUSF}$), the AKMA refresh parameter ($AKMA_{RP}$), and the at least one SUPI associated with UE 300 to the KDF as shown in eq. (1). Further, in another embodiment, the AKMA key identifier generator 260 generates the new AKMA key identifier (A-KID'). The AKMA key identifier generator 260 generates the new AKMA key identifier (A-KID') by generating the new AKMA temporary identifier (A-TID'). The AKMA key identifier generator 260 generates the new AKMA temporary identifier (A-TID') based on the AUSF key ($K_{AUSF}$), "A-TID", the AKMA refresh parameter ($AKMA_{RP}$), and the at least one SUPI associated with UE 300. In one embodiment, the AKMA key identifier generator 260 generates the new AKMA temporary identifier (A-TID') by inputting the AUSF key ($K_{AUSF}$), the present AKMA temporary identifier (A-TID), the AKMA refresh parameter ($AKMA_{RP}$), and the at least one SUPI associated with UE 300 to the KDF as shown in eq. (2).

At 735, the AUSF 202 sends an AKMA response to the UDM 203. In one embodiment, the AUSF 202 send the AKMA refresh response to the UDM 203. The AKMA refresh response includes an acknowledgment for the AKMA refresh request received from the UDM 203. The AKMA refresh response also includes the AKMA MAC-$I_{AUSF}$ and the $Counter_{AKMA}$.

At 740, the AUSF 202 sends an AKMA Anchor Key Register Request Refresh Response to the AAnF 204. In one embodiment, the AUSF 202 sends the AKMA Anchor Key Register Request Refresh Response to the AAnF 204. In one embodiment, the AKMA Anchor Key Register Request Refresh Response includes the new AKMA key ($K_{AKMA}$'), at least one SUPI associated with UE 300, and the new AKMA key identifier (A-KID').

At 745, the UDM 203 sends a notification to the AMF 201. In one embodiment, the UDM 203 sends the notification to the AMF 201. The notification includes at least one of AKMA refresh parameter ($AKMA_{RP}$), AKMA MAC-$I_{AUSF}$, and $Counter_{AKMA}$.

At 750, the AMF 201 sends a notification to the UE 300. In one embodiment, the AMF 201 sends the notification to the UE 300. The notification includes at least one of AKMA refresh parameter ($AKMA_{RP}$), AKMA MAC-$I_{AUSF}$, and $Counter_{AKMA}$.

At 755, the UE 300 generates a new AKMA key and associated AKMA key identifier (A-KID) based on the received notification. In an embodiment, the AKMA key generator 340 generates the new AKMA key ($K_{AKMA}$'). The AKMA key generator 340 generates the new AKMA key ($K_{AKMA}$') based on the AUSF key ($K_{AUSF}$), "AKMA", the AKMA refresh parameter ($AKMA_{RP}$), and the at least one SUPI associated with UE 300. In one embodiment, the new AKMA key ($K_{AKMA}$') is generated by inputting the AKMA, the AUSF key ($K_{AUSF}$), the AKMA refresh parameter ($AKMA_{RP}$), and at least one SUPI associated with UE 300 to the KDF as shown in eq. (1). Further, in another embodiment, the AKMA key identifier generator 350 generates the new AKMA key identifier (A-KID'). The AKMA key identifier generator 350 generates the new AKMA key identifier (A-KID') by generating the new AKMA temporary identifier (A-TID'). The AKMA key identifier generator 350 generates the new AKMA temporary identifier (A-TID') based on the AUSF key ($K_{AUSF}$), "A-TID", , the AKMA refresh parameter ($AKMA_{RP}$), and the at least one SUPI associated with UE 300. In one embodiment, the AKMA key identifier generator 350 generates the new AKMA temporary identifier (A-TID') by inputting the AUSF key ($K_{AUSF}$), the present AKMA temporary identifier (A-TID), the AKMA refresh parameter ($AKMA_{RP}$), and the at least one SUPI associated with UE 300 to the KDF as shown in eq. (2).

At 760, the UE 300 sends an acknowledgment to the AMF 201. In one embodiment, the UE 300 sends the acknowledgment to the AMF 201.

At 765, the AMF 201 sends an acknowledgment to the UDM 203. In one embodiment, the AMF 201 sends the acknowledgment to the UDM 203.

At 770, the UE 300 sends an application session establishment request to the AF 205. In one embodiment, the UE 300 sends the application session establishment request to the AF 205 based on the new AKMA key identifier (A-KID').

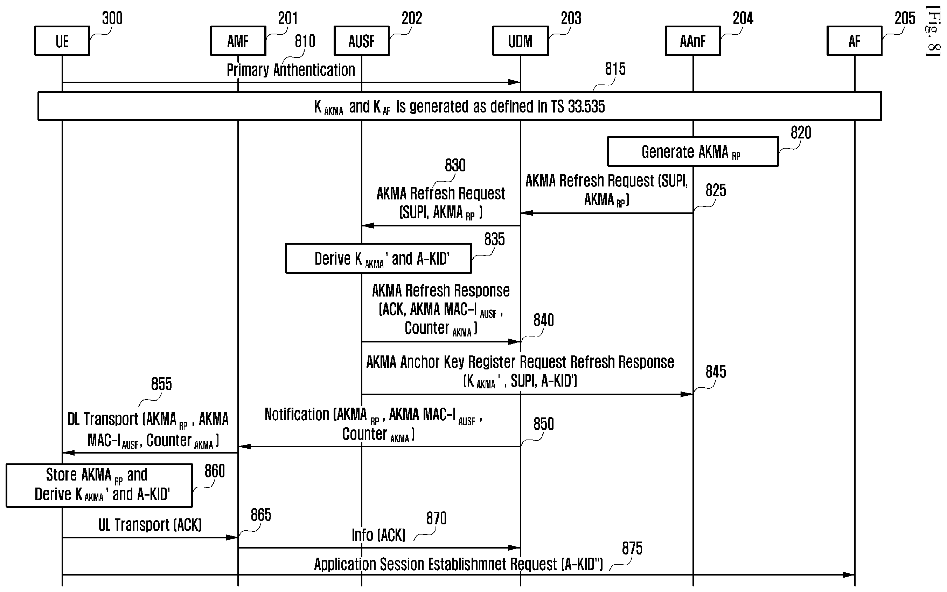

FIG. 8 is yet another example sequential flow diagram illustrating generation of a new AKMA Key and associated AKMA Key Identifier, according to the embodiments as disclosed herein.

At 810, the UE 300 performs a primary authentication with network entity by registering with the UDM 203. After performing the primary authentication, the UE 300 and the AUSF 202 will derive the AUSF Key ($K_{AUSF}$) as specified in TS 33.501.

At 815, the UE 300 and the AF 205 will derive the $K_{AKMA}$ and the $K_{AF}$ as per TS 33.535.

At 820, the AAnF 204 generates an AKMA refresh parameter. In one embodiment, the AKMA refresh parameter generator 240 generates an AKMA refresh parameter ($AKMA_{RP}$). In one embodiment, the $AKMA_{RP}$ can be at least one of the random (RAND) value, the $Counter_{AKMA}$, and the $Counter_{AF}$ value.

At 825, the AAnF 204 sends an AKMA refresh request to the UDM 203. In one embodiment, the AKMA refresh request received from the AAnF 204 includes the AKMA refresh parameter and the at least one SUPI associated with the at least one user equipment (UE).

At 830, the UDM 203 sends the AKMA refresh parameter to the AUSF 202. In one embodiment, the UDM 203 sends the AKMA refresh parameter (AKMA$_{RP}$) along with the at least one SUPI associated with UE 300 to the AUSF 202.

At 835, the AUSF 202 generates the new AKMA key (K$_{AKMA}$') and associated AKMA key identifier (A-KID'). In an embodiment, the AKMA key generator 250 generates the new AKMA key (K$_{AKMA}$'). The AKMA key generator 250 generates the new AKMA key (K$_{AKMA}$') based on the AKMA, the AUSF key (K$_{AUSF}$), the AKMA refresh parameter (AKMA$_{RP}$), and the at least one SUPI associated with the UE 300. In one embodiment, the new AKMA key (K$_{AKMA}$') is generated by inputting the "AKMA", the AUSF key (K$_{AUSF}$), the AKMA refresh parameter (AKMA$_{RP}$), and the at least one SUPI associated with UE 300 to the KDF as shown in eq. (1). Further, in another embodiment, the AKMA key identifier generator 260 generates the new AKMA key identifier (A-KID'). The AKMA key identifier generator 260 generates the new AKMA key identifier (A-KID') by generating the new AKMA temporary identifier (A-TID'). The AKMA key identifier generator 260 generates the new AKMA temporary identifier (A-TID') based on the AUSF key (K$_{AUSF}$), "A-TID", the AKMA refresh parameter (AKMA$_{RP}$), and the at least one SUPI associated with UE 300. In one embodiment, the AKMA key identifier generator 260 generates the new AKMA temporary identifier (A-TID') by inputting the AUSF key (K$_{AUSF}$), the present AKMA temporary identifier (A-TID), the AKMA refresh parameter (AKMA$_{RP}$), and the at least one SUPI associated with UE 300 to the key distribution function as shown in eq. (2).

At 840, the AUSF 202 sends an AKMA response to the UDM 203. In one embodiment, the AUSF 202 send the AKMA refresh response to the UDM 203. The AKMA refresh response includes an acknowledgment for the AKMA refresh request received from the UDM 203. The AKMA refresh response also includes the AKMA MAC-I$_{AUSF}$ and the Counter$_{AKMA}$.

At 845, the AUSF 202 sends an AKMA Anchor Key Register Request Refresh Response to the AAnF 204. In one embodiment, the AUSF 202 sends the AKMA Anchor Key Register Request Refresh Response to the AAnF 204. In one embodiment, the AKMA Anchor Key Register Request Refresh Response includes the new AKMA key (K$_{AKMA}$'), at least one SUPI associated with UE 300, and the new AKMA key identifier (A-KID').

At 850, the UDM 203 sends a notification to the AMF 201. In one embodiment, the UDM 2003 sends the notification to the AMF 201. The notification includes at least one of the AKMA refresh parameter (AKMA$_{RP}$), the AKMA MAC-I$_{AUSF}$, and the Counter$_{AKMA}$.

At 855, the AMF 201 sends a notification to the UE 300. In one embodiment, the AMF 201 sends the notification to the UE 300. The notification includes at least one of the AKMA refresh parameter (AKMA$_{RP}$), the AKMA MAC-I$_{AUSF}$, and the Counter$_{AKMA}$.

At 860, the UE 300 generates a new AKMA key and associated AKMA key identifier (A-KID) based on the received notification. In an embodiment, the AKMA key generator 340 generates a new AKMA key (K$_{AKMA}$'). The AKMA key generator 340 generates the new AKMA key (K$_{AKMA}$') based on the AUSF key (K$_{AUSF}$), "AKMA", the AKMA refresh parameter (AKMA$_{RP}$), and the at least one SUPI associated with the UE 300. In one embodiment, the new AKMA key (K$_{AKMA}$') is generated by inputting the AKMA, the AUSF key (K$_{AUSF}$), the AKMA refresh parameter (AKMA$_{RP}$), and the at least one SUPI associated with the UE 300 to the KDF as shown in eq. (1). Further, in another embodiment, the AKMA key identifier generator 350 generates the new AKMA key identifier (A-KID'). The AKMA key identifier generator 350 generates the new AKMA key identifier (A-KID') by generating the new AKMA temporary identifier (A-TID'). The AKMA key identifier generator 350 generates the new AKMA temporary identifier (A-TID') based on the AUSF key (K$_{AUSF}$), "A-TID", the AKMA refresh parameter (AKMA$_{RP}$), and the at least one SUPI associated with the UE 300. In one embodiment, the AKMA key identifier generator 350 generates the new AKMA temporary identifier (A-TID') by inputting the AUSF key (K$_{AUSF}$), the present AKMA temporary identifier (A-TID), the AKMA refresh parameter (AKMA$_{RP}$), and the at least one SUPI associated with the UE 300 to the KDF as shown in eq. (2).

At 865, the UE 300 sends an acknowledgment to the AMF 201. In one embodiment, the UE 300 sends the acknowledgment to the AMF 201.

At 870, the AMF 201 sends an acknowledgment to the UDM 203. In one embodiment, the AMF 201 sends the acknowledgment to the UDM 203.

At 875, the UE 300 sends an application session establishment request to the AF 205. In one embodiment, the UE 300 sends the application session establishment request to the AF 205 based on the new AKMA key identifier (A-KID').

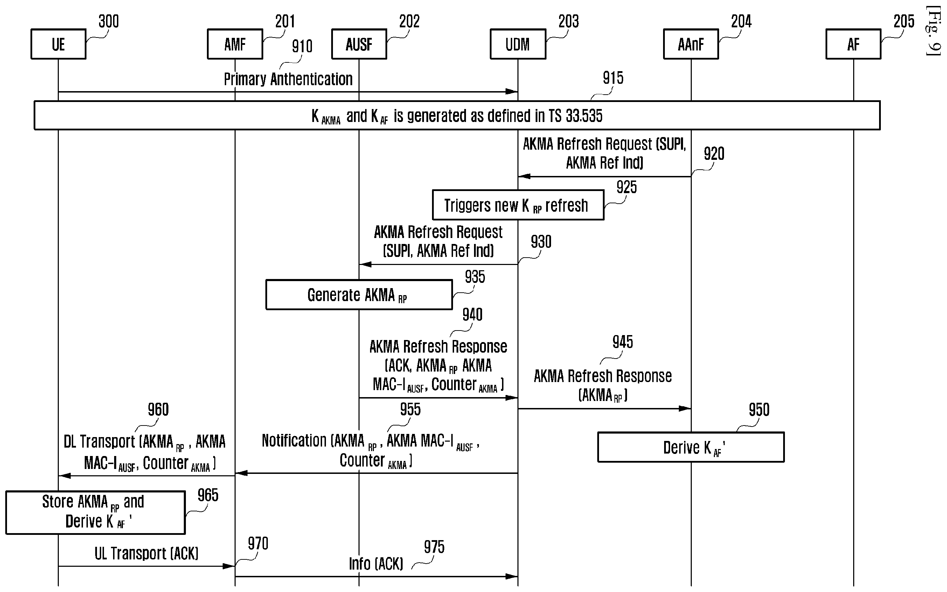

FIG. 9 is an example sequential flow diagram illustrating generation of a new AF Key, according to the embodiments as disclosed herein.

At 910, the UE 300 performs a primary authentication with network entity by registering with the UDM 203. After performing the primary authentication, the UE 300 and the AUSF 202 will derive the AUSF Key (K$_{AUSF}$) as specified in TS 33.501.

At 915, the UE 300 and the AF 205 will derive the K$_{AKMA}$ and the K$_{AF}$ as per TS 33.535.

At 920, the AAnF 204 sends an AKMA refresh request to the UDM 203. In one embodiment, the AKMA refresh request received from the AAnF 204 includes the AKMA refresh indicator and the at least one SUPI associated with the at least one user equipment (UE).

At 925, the UDM 203 triggers a new K$_{AF}$ refresh based on the AKMA refresh request received from the AAnF.

At 930, the UDM 203 sends an AKMA refresh request to the AUSF 202. In one embodiment, the AKMA refresh request received from the AUSF 202 includes an AKMA refresh indicator and the at least one SUPI associated with the at least one user equipment (UE).

At 935, the UDM 203 generates an AKMA refresh parameter based on the received AKMA refresh request. In one embodiment, the AKMA refresh parameter generator 240 generates an AKMA refresh parameter ($AKMA_{RP}$). In one embodiment, the $AKMA_{RP}$ can be at least one of the random (RAND) value, the $Counter_{AKMA}$, and the $Counter_{AF}$ value.

At 940, the AUSF 202 sends an AKMA response to the UDM 203. In one embodiment, the AUSF 202 sends the AKMA refresh response to the UDM 203. The AKMA refresh response includes an acknowledgment for the AKMA refresh request received from the UDM 203. The AKMA refresh response also includes AKMA MAC-$I_{AUSF}$, and $Counter_{AKMA}$.

At 945, the UDM 203 sends an AKMA refresh response to the AAnF 204. In one embodiment, the AKMA refresh response includes the AKMA refresh parameter ($AKMA_{RP}$).

At 950, the AAnF 204 generates a new AF key ($K_{AF}$) based on the AKMA refresh response.

At 955, the UDM 203 sends a notification to the AMF 201. In one embodiment, the UDM 203 sends the notification to the AMF 201. The notification includes at least one of AKMA refresh parameter ($AKMA_{RP}$), AKMA MAC-$I_{AUSF}$, and $Counter_{AKMA}$.

At 960, the AMF 201 sends a notification to the UE 300. In one embodiment, the AMF 201 sends the notification to the UE 300. The notification includes at least one of AKMA refresh parameter ($AKMA_{RP}$), AKMA MAC-$I_{AUSF}$, and $Counter_{AKMA}$.

At 965, the UE 300 generates a new AF key based on the received notification.

At 970, the UE 300 sends an acknowledgment to the AMF 201. In one embodiment, the UE 300 sends the acknowledgment to the AMF 201.

At 975, the AMF 201 sends an acknowledgment to the UDM 203. In one embodiment, the AMF 201 sends the acknowledgment to the UDM 203.

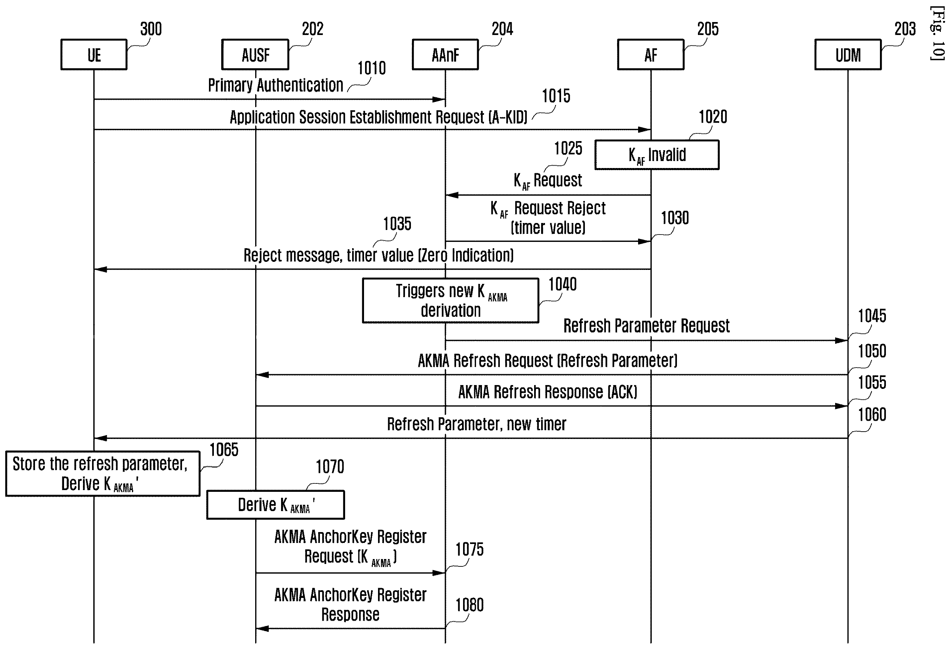

FIG. 10 is an example sequential flow diagram illustrating generation of a new AKMA Key based on a timer, according to the embodiments as disclosed herein.

At 1010, the UE 300 performs a primary authentication with network entity by registering with the AAnF 204. After performing the primary authentication, the UE 300 and the AUSF 202 will derive the AUSF Key ($K_{AUSF}$).

At 1015, the UE 300 sends an application session establishment request to the AF 205. In one embodiment, the UE 300 sends the application session establishment request to the AF based on the AKMA key identifier (A-KID).

At 1020, the AF 205 determines that the $K_{AF}$ as invalid when the timer associated with $K_{AF}$ is expired.

At 1025, the AF 205 send a new AF key ($K_{AF}$') request to the AAnF 204.

At 1030, the AAnF 204 send a request reject to the AF 205 if the new AF key ($K_{AF}$) is not available with the AAnF 204 along with current timer value of $K_{AF}$.

At 1035, the AF 205 sends a reject message along the current timer value to the UE 300.

At 1040, the AAnF 204 triggers new AKMA key ($K_{AKMA}$').

At 1045, the AAnF 204 send a refresh parameter request to the UDM 203.

At 1050, the UDM 203 generates the AKMA refresh parameter ($AKMA_{RP}$) and send the AKMA refresh response as an acknowledgment along with the generated $AKMA_{RP}$ to the AUSF 202.

At 1055, the AUSF 202 sends an AKMA refresh response upon receiving the AKMA refresh parameter from the UDM 203.

At 1060, the UDM 203 sends the generated $AKMA_{RP}$ along with associated new timer to the UE 300.

At 1065, the UE 300 generates new AKMA key ($K_{AKMA}$').

At 1070, the AUSF 202 generates new AKMA key ($K_{AKMA}$').

At 1075, the AUSF 202 sends an AKMA Anchor Key register request to the AAnF 204. In one embodiment, the AKMA Anchor Key register request includes the generated $K_{AKMA}$'.

At 1080, the AAnF 204 sends an AKMA Anchor Key register request to the AUSF 202. In one embodiment, the AKMA Anchor Key register response includes an acknowledgment for the $K_{AKMA}$' received at the AAnF 204.

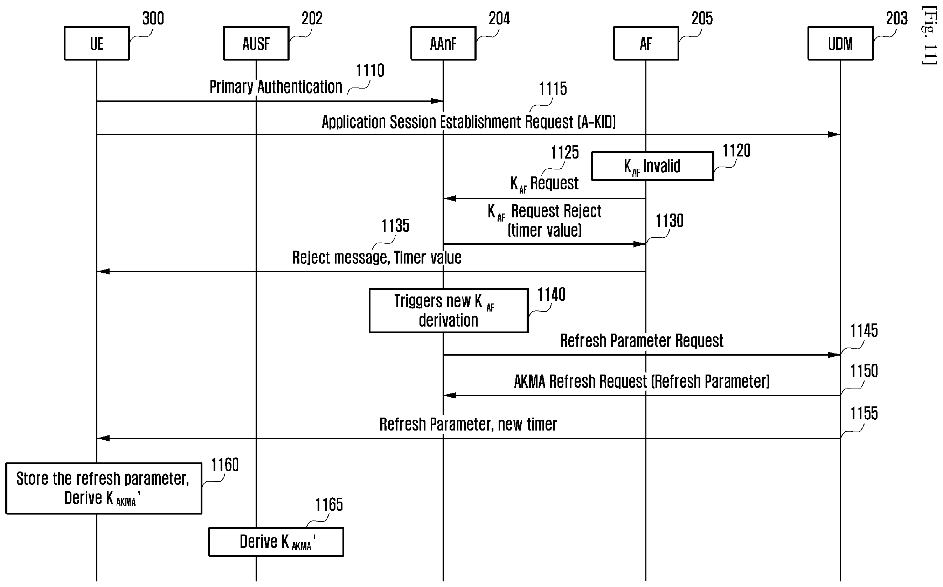

FIG. 11 is an example sequential flow diagram illustrating generation of a new AF Key based on a timer, according to the embodiments as disclosed herein.

At 1110, the UE 300 performs a primary authentication with network entity by registering with the AAnF 203. After performing the primary authentication, the UE 300 and the AUSF 202 will derive the AUSF Key ($K_{AUSF}$).

At 1115, the UE 300 sends an application session establishment request to the AF 205. In one embodiment, the UE 300 sends the application session establishment request to the AF 205 based on the AKMA key identifier (A-KID).

At 1120, the AF 205 determines that the $K_{AF}$ as invalid when the timer associated with $K_{AF}$ is expired.

At 1125, the AF 205 sends a new AF key ($K_{AF}$') request to the AAnF 204.

At 1130, the AAnF 204 sends a request reject to the AF 205 if the new AF key ($K_{AF}$) is not available with the AAnF 204 along with current timer value of $K_{AF}$.

At 1135, the AF 205 sends a reject message along the current timer value to the UE 300.

At 1140, the AAnF 204 triggers a new AF key ($K_{AF}$').

At 1145, the AAnF 204 sends a refresh parameter request to the UDM 203.

At 1150, the UDM 203 generates the AKMA refresh parameter ($AKMA_{RP}$) and send the AKMA refresh response as an acknowledgment along with the generated $AKMA_{RP}$ to the AAnF 204.

At 1155, the UDM 203 sends the generated $AKMA_{RP}$ along with associated new timer to the UE 300.

At 1160, the UE 300 generates the new AF key ($K_{AF}$').

At 1165, the AAnF 204 generate the new AF key ($K_{AF}$').

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

**Claims**

1. A method performed by a Unified Data Management, UDM (203), in a wireless network for generating at least one new Authentication and Key Management for Application, AKMA, key, the method comprising:

   receiving (402, 520, 1045) a first request from an AKMA Anchor Function, AAnF (204), wherein the first request is for AKMA refresh and the first request includes at least one subscription permanent identifier, SUPI, associated with at least one user equipment, UE (300), for generating at least one new AKMA key;
   generating (404) at least one AKMA parameter for refresh based on the received first request; and
   sending (406, 530, 1050) the at least one generated AKMA parameter for refresh to an Authentication Server Function, AUSF (202), for generating (408) the at least one new AKMA key.

2. The method of claim 1, further comprising:
   receiving (410, 540, 1055), at least one response message from the AUSF (202) upon generating the at least one new AKMA key by the AUSF (202).

3. The method of claim 1, further comprising:
   sending (414, 550, 1060) the at least one generated AKMA parameter for refresh to at least one UE (300) through an Access and Mobility Management Function, AMF.

4. The method of claim 1, wherein the at least one new AKMA key is associated with a new AKMA Key Identifier.

5. A method of generating at least one new Authentication and Key Management for Application, AKMA, key by an Authentication Server Function, AUSF (202), in a wireless network, the method comprising:

   receiving (406, 530, 1050) a response message from a Unified Data Management, UDM (203), wherein the response message includes at least one AKMA parameter for refresh and at least one subscription permanent identifier, SUPI, associated with at least one user equipment, UE (300), for generating at least one new AKMA key;
   generating (408, 535, 1070) the at least one new AKMA key and new AKMA Key Identifier, A-KID', based on the received response message; and
   sending (412, 545, 1075) the generated at least one new AKMA key to an AKMA Anchor Function, AAnF (204).

6. The method of claim 5, further comprising:
   sending, at least one acknowledgment to the UDM (203) upon generating the at least one new AKMA key.

7. The method of claim 5, further comprising:

   generating the $K_{AKMA}$' based on at least one of an AUSF Key, $K_{AUSF}$, AKMA, the AKMA parameter for refresh, or the at least one SUPI to a key derivation function, KDF,
   generating a new AKMA Temporary Identifier, A-TID' based on at least one of the $K_{AUSF}$, an AKMA Temporary Identifier, A-TID, the AKMA parameter for refresh, or the at least one SUPI to the KDF, and generating the A-KID' based on the A-TID'.

8. A method of generating at least one new Authentication and Key Management for Application, AKMA, key by a User Equipment, UE (300), in a wireless network, the method comprising:

receiving (414, 555, 1060), from a Unified Data Management, UDM (203), at least one Authentication and Key Management for Application, AKMA, parameter for refresh for generating the at least one new AKMA key;
generating (560, 1065) the at least one new AKMA key and associated new AKMA key identifier, A-KID', based on the at least one received AKMA parameter for refresh; and
sending (575) a second request to at least one Application Function, AF (205), based on the at least one generated new AKMA key, wherein the second request is an application session establishment request for establishing the communication between the UE (300) and the at least one AF.

9. The method of claim 8, further comprising:
sending, at least one acknowledgment to the UDM (203) in response to the generating the at least one new AKMA key.

10. The method of claim 8, wherein the at least one generated new AKMA key is associated with the A-KID'.

11. A Unified Data Management, UDM (203), in a wireless network for generating at least one new Authentication and key Management for Application, AKMA, key, the UDM (203) comprising:

a communicator (230); and
a processor (220), coupled to the communicator (230), configured to:

receive (402, 520, 1045) a first request from an AKMA Anchor Function, AAnF (204), wherein the first request is for AKMA refresh and the first request includes at least one subscription permanent identifier, SUPI, associated with at least one user equipment, UE (300), for generating at least one new AKMA key, generate at least one AKMA parameter for refresh based on the received first request, and
send (406, 530, 1050) the at least one generated AKMA parameter for refresh to an Authentication Server Function, AUSF (202), for generating the at least one new AKMA key.

12. The UDM (203) of claim 11, wherein the processor is further configured to:
send (414, 550, 1060) the generated AKMA parameter for refresh to at least one UE (300) through an Access and Mobility Management Function, AMF.

13. An Authentication Server Function, AUSF (202), in a wireless network for generating at least one new Authentication and Key Management for Application, AKMA, key, the AUSF (202) comprising:

a communicator (230); and
a processor (220), coupled to the communicator (230), configured to:
receive (406, 530, 1050) a response message from a Unified Data Management, UDM (203), wherein the response message includes at least one AKMA parameter for refresh and at least one subscription permanent identifier, SUPI, associated with at least one user equipment, UE (300), for generating at least one new AKMA key, generate (408, 535, 1070) the at least one new AKMA key and new AKMA Key Identifier, A-KID', based on the received response message, and
send (412, 545, 1075) the generated at least one new AKMA key to an AKMA Anchor Function, AAnF (204).

14. The AUSF (202) of claim 13, wherein the processor is further configured to:
send at least one acknowledgment to the UDM (203) upon generating the at least one new AKMA key.

15. A User Equipment, UE (300), in a wireless network for generating at least one new Authentication and Key Management for Application, AKMA, key, the UE (300) comprising:

a communicator (330); and
a processor (320), coupled to the communicator (330), configured to:

receive (555, 1060), from a Unified Data Management, UDM (203), at least one Authentication and Key Management for Application, AKMA, parameter for refresh for generating the at least one new AKMA key, generate (560, 1065) the at least one new AKMA key and associated new AKMA key identifier, A-KID', based on the at least one received AKMA parameter for refresh, and

send (575) a second request to at least one Application Function, AF(205), based on the at least one generated new AKMA key, wherein the second request is an application session establishment request for establishing the communication between the UE (300) and the at least one AF.

**Patentansprüche**

1. Von einer einheitlichen Datenverwaltung, UDM (203), in einem drahtlosen Netzwerk durchgeführtes Verfahren zum Erzeugen mindestens eines neuen Schlüssels zur Authentifizierung und Schlüsselverwaltung für Anwendungen, AKMA, wobei das Verfahren Folgendes umfasst:

   Empfangen (402, 520, 1045) einer ersten Anforderung von einer AKMA-Ankerfunktion, AAnF (204), wobei die erste Anforderung zur AKMA-Aktualisierung dient und die erste Anforderung mindestens eine permanente Teilnahmekennung, SUPI, beinhaltet, die mit mindestens einem Benutzergerät, UE (300), assoziiert ist, um mindestens einen neuen AKMA-Schlüssel zu erzeugen;
   Erzeugen (404) mindestens eines AKMA-Parameters zur Aktualisierung basierend auf der empfangenen ersten Anforderung; und
   Senden (406, 530, 1050) des mindestens einen erzeugten AKMA-Parameters zur Aktualisierung an eine Authentifizierungsserverfunktion, AUSF (202), zum Erzeugen (408) des mindestens einen neuen AKMA-Schlüssels.

2. Verfahren nach Anspruch 1, ferner umfassend:
   Empfangen (410, 540, 1055) mindestens einer Antwortnachricht von der AUSF (202) bei der Erzeugung des mindestens einen neuen AKMA-Schlüssels durch die AUSF (202).

3. Verfahren nach Anspruch 1, ferner umfassend:
   Senden (414, 550, 1060) des mindestens einen erzeugten AKMA-Parameters zur Aktualisierung an mindestens ein UE (300) über eine Zugriffs- und Mobilitätsverwaltungsfunktion, AMF.

4. Verfahren nach Anspruch 1, wobei der mindestens eine neue AKMA-Schlüssel mit einer neuen AKMA-Schlüsselkennung assoziiert ist.

5. Verfahren zum Erzeugen mindestens eines neuen Schlüssels zur Authentifizierung und Schlüsselverwaltung für Anwendungen, AKMA, durch eine Authentifizierungsserverfunktion, AUSF (202), in einem drahtlosen Netzwerk, wobei das Verfahren Folgendes umfasst:

   Empfangen (406, 530, 1050) einer Antwortnachricht von einer einheitlichen Datenverwaltung, UDM (203), wobei die Antwortnachricht mindestens einen AKMA-Parameter zur Aktualisierung und mindestens eine permanente Teilnahmekennung, SUPI, beinhaltet, die mit mindestens einem Benutzergerät, UE (300), assoziiert ist, um mindestens einen neuen AKMA-Schlüssel zu erzeugen;
   Erzeugen (408, 535, 1070) des mindestens einen neuen AKMA-Schlüssels und der neuen AKMA-Schlüsselkennung, A-KID', basierend auf der empfangenen Antwortnachricht; und
   Senden (412, 545, 1075) des erzeugten mindestens einen neuen AKMA-Schlüssels an eine AKMA-Ankerfunktion, AAnF (204).

6. Verfahren nach Anspruch 5, ferner umfassend:
   Senden mindestens einer Bestätigung an die UDM (203) bei der Erzeugung des mindestens einen neuen AKMA-Schlüssels.

7. Verfahren nach Anspruch 5, ferner umfassend:

   Erzeugen des $K_{AKMA}$' basierend auf mindestens einem von einem AUSF-Schlüssel, $K_{AUSF}$, AKMA, dem AKMA-Parameter zur Aktualisierung oder der mindestens einen SUPI zu einer Schlüsselableitungsfunktion, KDF,
   Erzeugen einer neuen temporären AKMA-Kennung, A-TID', basierend auf mindestens einem von dem $K_{AUSF}$, einer temporären AKMA-Kennung, A-TID, dem AKMA-Parameter zur Aktualisierung oder der mindestens einen SUPI zur KDF, und

Erzeugen der A-KID' basierend auf der A-TID'.

8. Verfahren zum Erzeugen mindestens eines neuen Schlüssels zur Authentifizierung und Schlüsselverwaltung für Anwendungen, AKMA, durch ein Benutzergerät, UE (300), in einem drahtlosen Netzwerk, wobei das Verfahren Folgendes umfasst:

Empfangen (414, 555, 1060), von einer einheitlichen Datenverwaltung, UDM (203), mindestens eines Parameters zur Aktualisierung zur Authentifizierung und Schlüsselverwaltung für Anwendungen, AKMA, zum Erzeugen des mindestens einen neuen AKMA-Schlüssels;

Erzeugen (560, 1065) des mindestens einen neuen AKMA-Schlüssels und einer assoziierten neuen AKMA-Schlüsselkennung, A-KID', basierend auf dem mindestens einen empfangenen AKMA-Parameter zur Aktualisierung; und

Senden (575) einer zweiten Anforderung an mindestens eine Anwendungsfunktion, AF (205), basierend auf dem mindestens einen erzeugten neuen AKMA-Schlüssel, wobei die zweite Anforderung eine Anwendungssitzungs-Aufbauanforderung zum Aufbau der Kommunikation zwischen dem UE (300) und der mindestens einen AF ist.

9. Verfahren nach Anspruch 8, ferner umfassend:

Senden mindestens einer Bestätigung an die UDM (203) als Reaktion auf das Erzeugen des mindestens einen neuen AKMA-Schlüssels.

10. Verfahren nach Anspruch 8, wobei der mindestens eine erzeugte neue AKMA-Schlüssel mit der A-KID' assoziiert ist.

11. Einheitliche Datenverwaltung, UDM (203), in einem drahtlosen Netzwerk zum Erzeugen mindestens eines neuen Schlüssels zur Authentifizierung und Schlüsselverwaltung für Anwendungen, AKMA, wobei die UDM (203) Folgendes umfasst:

einen Kommunikator (230); und

einen Prozessor (220), der mit dem Kommunikator (230) gekoppelt und konfiguriert ist zum:

Empfangen (402, 520, 1045) einer ersten Anforderung von einer AKMA-Ankerfunktion, AAnF (204), wobei die erste Anforderung zur AKMA-Aktualisierung dient und die erste Anforderung mindestens eine permanente Teilnahmekennung, SUPI, beinhaltet, die mit mindestens einem Benutzergerät, UE (300), assoziiert ist, um mindestens einen neuen AKMA-Schlüssel zu erzeugen,

Erzeugen mindestens eines AKMA-Parameters zur Aktualisierung basierend auf der empfangenen ersten Anforderung, und

Senden (406, 530, 1050) des mindestens einen erzeugten AKMA-Parameters zur Aktualisierung an eine Authentifizierungsserverfunktion, AUSF (202), zum Erzeugen des mindestens einen neuen AKMA-Schlüssels.

12. UDM (203) nach Anspruch 11, wobei der Prozessor ferner konfiguriert ist zum:

Senden (414, 550, 1060) des erzeugten AKMA-Parameters zur Aktualisierung an mindestens ein UE (300) über eine Zugriffs- und Mobilitätsverwaltungsfunktion, AMF.

13. Authentifizierungsserverfunktion, AUSF (202), in einem drahtlosen Netzwerk zum Erzeugen mindestens eines neuen Schlüssels zur Authentifizierung und Schlüsselverwaltung für Anwendungen, AKMA, wobei die AUSF (202) Folgendes umfasst:

einen Kommunikator (230); und

einen Prozessor (220), der mit dem Kommunikator (230) gekoppelt und konfiguriert ist zum:

Empfangen (406, 530, 1050) einer Antwortnachricht von einer einheitlichen Datenverwaltung, UDM (203), wobei die Antwortnachricht mindestens einen AKMA-Parameter zur Aktualisierung und mindestens eine permanente Teilnahmekennung, SUPI, beinhaltet, die mit mindestens einem Benutzergerät, UE (300), assoziiert ist, um mindestens einen neuen AKMA-Schlüssel zu erzeugen,

Erzeugen (408, 535, 1070) des mindestens einen neuen AKMA-Schlüssels und der neuen AKMA-Schlüsselkennung, A-KID', basierend auf der empfangenen Antwortnachricht, und

Senden (412, 545, 1075) des erzeugten mindestens einen neuen AKMA-Schlüssels an eine AKMA-Ankerfunktion, AAnF (204).

**14.** AUSF (202) nach Anspruch 13, wobei der Prozessor ferner konfiguriert ist zum:
Senden mindestens einer Bestätigung an die UDM (203) bei der Erzeugung des mindestens einen neuen AKMA-Schlüssels.

**15.** Benutzergerät, UE (300), in einem drahtlosen Netzwerk zum Erzeugen mindestens eines neuen Schlüssels zur Authentifizierung und Schlüsselverwaltung für Anwendungen, AKMA, wobei das UE (300) Folgendes umfasst:

einen Kommunikator (330); und
einen Prozessor (320), der mit dem Kommunikator (330) gekoppelt und konfiguriert ist zum:

Empfangen (555, 1060), von einer einheitlichen Datenverwaltung, UDM (203), mindestens eines Parameters zur Aktualisierung zur Authentifizierung und Schlüsselverwaltung für Anwendungen, AKMA, zum Erzeugen des mindestens einen neuen AKMA-Schlüssels,
Erzeugen (560, 1065) des mindestens einen neuen AKMA-Schlüssels und einer assoziierten neuen AKMA-Schlüsselkennung, A-KID', basierend auf dem mindestens einen empfangenen AKMA-Parameter zur Aktualisierung, und
Senden (575) einer zweiten Anforderung an mindestens eine Anwendungsfunktion, AF (205), basierend auf dem mindestens einen erzeugten neuen AKMA-Schlüssel, wobei die zweite Anforderung eine Anwendungssitzungs-Aufbauanforderung zum Aufbau der Kommunikation zwischen dem UE (300) und der mindestens einen AF ist.

**Revendications**

**1.** Procédé exécuté par une gestion de données unifiées, UDM (203), dans un réseau sans fil pour générer au moins une nouvelle clé d'authentification et de gestion de clés pour l'application, AKMA, le procédé comprenant :

recevoir (402, 520, 1045) une première demande d'une fonction d'ancrage AKMA, AAnF (204), dans lequel la première demande est pour le rafraîchissement AKMA et la première demande comprend au moins un identifiant permanent d'abonnement, SUPI, associé à au moins un équipement utilisateur, UE (300), pour la génération d'au moins une nouvelle clé AKMA ;
générer (404) au moins un paramètre AKMA pour le rafraîchissement sur la base de la première demande reçue ; et
envoyer (406, 530, 1050) l'au moins un paramètre AKMA généré pour rafraîchissement à une fonction de serveur d'authentification, AUSF (202), pour générer (408) l'au moins une nouvelle clé AKMA.

**2.** Procédé de la revendication 1, comprenant en outre :
recevoir (410, 540, 1055) au moins un message de réponse depuis l'AUSF (202) lors de la génération de l'au moins une nouvelle clé AKMA par l'AUSF (202).

**3.** Procédé de la revendication 1, comprenant en outre :
envoyer (414, 550, 1060) l'au moins un paramètre AKMA généré pour le rafraîchissement à au moins un UE (300) par l'intermédiaire d'une fonction de gestion d'accès et de mobilité, AMF.

**4.** Procédé de la revendication 1, dans lequel l'au moins une nouvelle clé AKMA est associée à un nouvel identifiant de clé AKMA.

**5.** Procédé de génération d'au moins une nouvelle clé d'authentification et de gestion de clé pour l'application, AKMA, par une fonction de serveur d'authentification, AUSF (202), dans un réseau sans fil, le procédé comprenant :

recevoir (406, 530, 1050) un message de réponse provenant d'une gestion de données unifiée, UDM (203), dans lequel le message de réponse comprend au moins un paramètre AKMA pour le rafraîchissement et au moins un identifiant permanent d'abonnement, SUPI, associé à au moins un équipement utilisateur, UE (300), pour la génération d'au moins une nouvelle clé AKMA ;
générer (408, 535, 1070) l'au moins une nouvelle clé AKMA et le nouvel identifiant de clé AKMA, A-KID', sur la base du message de réponse reçu ; et

envoyer (412, 545, 1075) l'au moins une nouvelle clé AKMA générée à une fonction d'ancrage AKMA, AAnF (204).

**6.** Procédé de la revendication 5, comprenant en outre :
envoyer au moins un accusé de réception à l'UDM (203) lors de la génération de l'au moins une nouvelle clé AKMA.

**7.** Procédé de la revendication 5, comprenant en outre :

générer le $K_{AKMA}'$ sur la base d'au moins un parmi une clé AUSF, $K_{AUSF}$, AKMA, le paramètre AKMA pour le rafraîchissement ou l'au moins un SUPI pour une fonction de dérivation de clé, KDF,
générer un nouvel identifiant temporaire AKMA, A-TID' en se basant sur au moins un parmi un $K_{AUSF}$, un identifiant temporaire AKMA, A-TID, le paramètre AKMA pour le rafraîchissement, ou l'au moins un SUPI vers la KDF, et
générer l'A-KID' en se basant sur l'A-TID'.

**8.** Procédé de génération d'au moins une nouvelle clé d'authentification et de gestion de clé pour l'application, AKMA, par un équipement utilisateur, UE (300), dans un réseau sans fil, le procédé comprenant :

recevoir (414, 555, 1060), à partir d'une gestion de données unifiée, UDM (203), au moins un paramètre d'authentification et de gestion de clés pour l'application, AKMA, pour le rafraîchissement pour la génération de l'au moins une nouvelle clé AKMA ;
générer (560, 1065) l'au moins une nouvelle clé AKMA et un nouvel identifiant de clé AKMA associé, A-KID', sur la base de l'au moins un paramètre AKMA reçu pour le rafraîchissement ; et
envoyer (575) une deuxième demande à au moins une fonction d'application, AF (205), sur la base de l'au moins une nouvelle clé AKMA générée, dans lequel la deuxième demande est une demande d'établissement de session d'application pour établir la communication entre l'UE (300) et l'au moins une AF.

**9.** Procédé de la revendication 8, comprenant en outre :
envoyer au moins un accusé de réception à l'UDM (203) en réponse à la génération de l'au moins une nouvelle clé AKMA.

**10.** Procédé de la revendication 8, dans lequel l'au moins une nouvelle clé AKMA générée est associée à l'A-KID'.

**11.** Gestion unifiée de données, UDM (203), dans un réseau sans fil pour générer au moins une nouvelle clé d'authentification et de gestion de clés pour l'application, AKMA, l'UDM (203) comprenant :

un communicateur (230) ; et
un processeur (220), couplé au communicateur (230), configuré pour :

recevoir (402, 520, 1045) une première demande d'une fonction d'ancrage AKMA, AAnF (204), dans laquelle la première demande est pour le rafraîchissement AKMA et la première demande comprend au moins un identifiant permanent d'abonnement, SUPI, associé à au moins un équipement utilisateur, UE (300), pour la génération d'au moins une nouvelle clé AKMA,
générer au moins un paramètre AKMA pour le rafraîchissement sur la base de la première demande reçue, et
envoyer (406, 530, 1050) l'au moins un paramètre AKMA généré pour rafraîchissement à une fonction de serveur d'authentification, AUSF (202), pour générer (408) l'au moins une nouvelle clé AKMA.

**12.** UDM (203) de la revendication 11, dans laquelle le processeur est en outre configuré pour :
envoyer (414, 550, 1060) le paramètre AKMA généré pour rafraîchissement à au moins un UE (300) par l'intermédiaire d'une fonction de gestion d'accès et de mobilité, AMF.

**13.** Fonction de serveur d'authentification, AUSF (202), dans un réseau sans fil pour générer au moins une nouvelle clé d'authentification et de gestion de clés pour l'application, AKMA, l'AUSF (202) comprenant :

un communicateur (230) ; et
un processeur (220), couplé au communicateur (230), configuré pour :

recevoir (406, 530, 1050) un message de réponse provenant d'une gestion de données unifiée, UDM (203), dans laquelle le message de réponse comprend au moins un paramètre AKMA pour le rafraîchissement et au moins un identifiant permanent d'abonnement, SUPI, associé à au moins un équipement utilisateur, UE (300), pour la génération d'au moins une nouvelle clé AKMA,

générer (408, 535, 1070) l'au moins une nouvelle clé AKMA et un nouvel identifiant de clé AKMA, A-KID', sur la base du message de réponse reçu, et

envoyer (412, 545, 1075) l'au moins une nouvelle clé AKMA générée à une fonction d'ancrage AKMA, AAnF (204).

14. AUSF (202) de la revendication 13, dans laquelle le processeur est en outre configuré pour :

envoyer au moins un accusé de réception à l'UDM (203) lors de la génération de l'au moins une nouvelle clé AKMA.

15. Équipement utilisateur, UE (300), dans un réseau sans fil pour générer au moins une nouvelle clé d'authentification et de gestion de clé pour l'application, AKMA, l'UE (300) comprenant :

un communicateur (330) ; et
un processeur (320), couplé au communicateur (330), configuré pour :

recevoir (414, 555, 1060), à partir d'une gestion de données unifiée, UDM (203), au moins un paramètre d'authentification et de gestion de clés pour l'application, AKMA, pour le rafraîchissement pour la génération de l'au moins une nouvelle clé AKMA,

générer (560, 1065) l'au moins une nouvelle clé AKMA et un nouvel identifiant de clé AKMA associé, A-KID', sur la base de l'au moins un paramètre AKMA reçu pour le rafraîchissement, et

envoyer (575) une deuxième demande à au moins une fonction d'application, AF (205), sur la base de l'au moins une nouvelle clé AKMA générée, dans lequel la deuxième demande est une demande d'établissement de session d'application pour établir la communication entre l'UE (300) et l'au moins une AF.

[Fig. 1]

[Fig. 2]

200

**Network Entity**

| Memory | Processor |
|---|---|

210

220

| Communicator | AKMA Refresh Parameter Generator |
|---|---|

230

240

| AKMA Key Generator | AKMA Key Identifier Generator |
|---|---|

250

260

AF Key Generator

270

[Fig. 3]

300

## User Equipment

| | |
|---|---|
| 310 — Memory | Processor — 320 |
| 330 — Communicator | AKMA Key Generator — 340 |
| 350 — AKMA Key Identifier Generator | AF Key Generator — 360 |

[Fig. 4A]

400

| Receiving, by a UDM, a AKMA refresh request from a AAnF in a wireless network | ~402 |

| Generating, by the UDM, a AKMA refresh parameter based on the received AKMA refresh request | ~404 |

| Sending, by the UDM, a AKMA refresh parameter to a AUSF in the wireless network | ~406 |

| Generating, by the AUSF, $K_{AKMA}$' and A-KID' | ~408 |

| Sending, by the AUSF, an AKMA response to the UDM | ~410 |

A

[Fig. 4B]

| Sending, by the AUSF, a AKMA Anchor Key Register Request Refresh Response to the AAnF | ~412 |

| Sending, by the UDM, a notification to a UE via a AMF | ~414 |

| Receiving, by the UDM, an acknowledgment from the UE | ~416 |

[Fig. 4C]

450

Receiving, by a UE, a notification from a UDM in a wireless network via a AMF — 452

Generating, by the UE, $K_{AKMA}'$ and A-KID' based on the received notification — 454

Sending, by the UE, an acknowledgment to the UDM via the AMF — 456

Sending, by the UE, an application session establishment request based on the generated A-KID' — 458

[Fig. 5]

EP 4 352 985 B1

| UE 300 | AMF 201 | AUSF 202 | UDM 203 | AAnF 204 | AF 205 |

510 Primary Authentication

515 $K_{AKMA}$ and $K_{AF}$ is generated as defined in TS 33.535

520 AKMA Refresh Request (SUPI, AKMA Ref Ind)

525 Generate $AKMA_{RP}$

530 AKMA Refresh Request (SUPI, $AKMA_{RP}$)

535 Derive $K_{AKMA}'$ and A-KID'

540 AKMA Refresh Response (ACK, AKMA MAC-I $_{AUSF}$, Counter $_{AKMA}$)

545 AKMA Anchor Key Register Request Refresh Response ($K_{AKMA}'$, SUPI, A-KID')

550 Notification ($AKMA_{RP}$, AKMA MAC-I $_{AUSF}$, Counter $_{AKMA}$)

555 DL Transport ($AKMA_{RP}$, AKMA MAC-I $_{AUSF}$, Counter $_{AKMA}$)

560 Store $AKMA_{RP}$ and Derive $K_{AKMA}'$ and A-KID'

565 UL Transport (ACK)

570 Info (ACK)

575 Application Session Establishmnet Request (A-KID")

[Fig. 6]

UE 300  AMF 201  AUSF 202  UDM 203  AAnF 204  AF 205

Primary Authentication
610

$K_{AKMA}$ and $K_{AF}$ is generated as defined in TS 33.535
615

AKMA Refresh Request (SUPI, AKMA Ref Ind)
620

Generate $AKMA_{RP}$
625

AKMA Refresh Request (SUPI, $AKMA_{RP}$ )
630

Derive $K_{AKMA}'$ and A-KID'
635

AKMA Refresh Response (ACK, AKMA MAC-I $_{AUSF}$ , Counter $_{AKMA}$ )
640

DL Transport ($AKMA_{RP}$ , AKMA MAC-I $_{AUSF}$ , Counter $_{AKMA}$ )
650

Notification ($AKMA_{RP}$ , AKMA MAC-I $_{AUSF}$ , Counter $_{AKMA}$ )
645

Store $AKMA_{RP}$ and Derive $K_{AKMA}'$ and A-KID'
655

UL Transport (ACK)
660

Info (ACK)
665

AKMA Refresh Info (ACK)
670

AKMA Anchor Key Register Request Refresh Response ($K_{AKMA}'$ , SUPI, A-KID')
675

Application Session Establishmnet Request (A-KID'')
680

28

[Fig. 7]

EP 4 352 985 B1

UE 300 | AMF 201 | AUSF 202 | UDM 203 | AAnF 204 | AF 205

Primary Authentication 710

$K_{AKMA}$ and $K_{AF}$ is generated as defined in TS 33.535 715

AKMA Refresh Request (SUPI, AKMA Ref Ind) 720

AKMA Refresh Request (SUPI, AKMA Ref Ind) 725

Generate $AKMA_{RP}$ and Derive $K_{AKMA}'$ and A-KID' 730

AKMA Refresh Response (ACK, AKMA MAC-I $_{AUSF}$, Counter $_{AKMA}$) 735

AKMA Anchor Key Register Request Refresh Response ($K_{AKMA}'$, SUPI, A-KID') 740

DL Transport ($AKMA_{RP}$, AKMA MAC-I$_{AUSF}$, Counter $_{AKMA}$) 750

Notification ($AKMA_{RP}$, AKMA MAC-I $_{AUSF}$, Counter $_{AKMA}$) 745

Store $AKMA_{RP}$ and Derive $K_{AKMA}'$ and A-KID' 755

UL Transport (ACK) 760

Info (ACK) 765

Application Session Establishmnet Request (A-KID") 770

[Fig. 8]

EP 4 352 985 B1

UE 300 | AMF 201 | AUSF 202 | UDM 203 | AAnF 204 | AF 205

810 Primary Authentication

815 K$_{AKMA}$ and K$_{AF}$ is generated as defined in TS 33.535

820 Generate AKMA$_{RP}$

825 AKMA Refresh Request (SUPI, AKMA$_{RP}$)

830 AKMA Refresh Request (SUPI, AKMA$_{RP}$)

835 Derive K$_{AKMA}$' and A-KID'

840 AKMA Refresh Response (ACK, AKMA MAC-I$_{AUSF}$, Counter$_{AKMA}$)

845 AKMA Anchor Key Register Request Refresh Response (K$_{AKMA}$', SUPI, A-KID')

850 Notification (AKMA$_{RP}$, AKMA MAC-I$_{AUSF}$, Counter$_{AKMA}$)

855 DL Transport (AKMA$_{RP}$, AKMA MAC-I$_{AUSF}$, Counter$_{AKMA}$)

860 Store AKMA$_{RP}$ and Derive K$_{AKMA}$' and A-KID'

865 UL Transport (ACK)

870 Info (ACK)

875 Application Session Establishmnet Request (A-KID")

[Fig. 9]

EP 4 352 985 B1

[Fig. 10]

EP 4 352 985 B1

32

[Fig. 11]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021109436 A1

**Non-patent literature cited in the description**

- **SAMSUNG**. Support for AKMA Key Refresh Service Operation. *3GPP DRAFT; C4-211227*

- **ERICSSON**. Solution #15 evaluation removal of EN. *3GPP DRAFT; S3-193597*